# EUROPÄISCHE PATENTSCHRIFT

(11) **EP 3 962 670 B1**
(45) Veröffentlichungstag und Bekanntmachung des Hinweises auf die Patenterteilung: **22.11.2023**
(21) Anmeldenummer: 20725633.0
(22) Anmeldetag: 28.04.2020
(51) Int. Cl.: B08B 3/02, B08B 5/02, B60S 1/48, B60S 1/56, G02B 27/00, B60S 1/54

(54) **REINIGUNGSVORRICHTUNG, DRUCKLUFTSYSTEM UND REINIGUNGSVERFAHREN ZUM BEAUFSCHLAGEN EINER OBERFLÄCHE MIT EINEM MEDIUMSPULS SOWIE ENTSPRECHENDES STEUERSYSTEM UND FAHRZEUG**
CLEANING DEVICE, COMPRESSED AIR SYSTEM AND CLEANING METHOD FOR SUPPLYING A MEDIUM PULSE TO A SURFACE AND CORRESPONDING CONTROL SYSTEM AND VEHICLE
DISPOSITIF DE NETTOYAGE, SYSTÈME À AIR COMPRIMÉ ET PROCÉDÉ DE NETTOYAGE POUR SOLLICITER UNE SURFACE PAR UNE IMPULSION DE MILIEU AINSI QUE SYSTÈME DE COMMANDE ET VÉHICULE CORRESPONDANTS

(30) Priorität: 03.05.2019 DE 102019111468
(43) Veröffentlichungstag der Anmeldung: 09.03.2022
(73) Patentinhaber: ZF CV Systems Europe BV, 1170 Brussels (BE)
(72) Erfinder: COHRS, Jan, 30173 Hannover (DE); FIEBRANDT, Jan, 31812 Bad Pyrmont (DE)
(74) Vertreter: Rabe, Dirk-Heinrich
(86) Internationale Anmeldenummer: PCT/EP2020/061715
(87) Internationale Veröffentlichungsnummer: WO 2020/225023

(56) Entgegenhaltungen:
- EP-A1- 3 168 094
- DE-A1- 3 803 491
- DE-A1-102011 056 647
- US-A1- 2018 272 999
- US-A1- 2018 290 631

## Beschreibung

Die Erfindung betrifft eine Reinigungsvorrichtung gemäß dem Oberbegriff des Anspruchs 1. Die Erfindung betrifft auch ein Druckluftsystem mit der Reinigungsvorrichtung sowie ein entsprechendes Reinigungsverfahren unter Verwendung der Reinigungsvorrichtung bzw. des Druckluftsystems. Die Erfindung betrifft weiter ein Fahrzeug mit der Reinigungsvorrichtung bzw. dem Druckluftsystem.

Reinigungsvorrichtungen, insbesondere zum Reinigen eines Sensors, vorzugsweise einer Anzahl von einem oder mehreren Sensoren in einem Fahrzeug, sind allgemein etwa in der Art eines Kolbeninjektors zur Sensorreinigung bekannt.

Eine eingangs genannte Reinigungsvorrichtung dient konkret zum Beaufschlagen einer Oberfläche mit einem Mediumspuls, insbesondere einer Oberfläche eines Sensors, vorzugsweise eines optischen Sensors, insbesondere eines Umgebungserfassungssensors, und weist auf:
- einen Druckzylinder, mit einem Druckanschluss, einem Mediumsanschluss und einem ersten Düsenanschluss, wobei
- im Druckzylinder ein Trenn- und Verdrängungsmittel mit einer ersten und/oder zweiten Druckgeberfläche angeordnet ist, zum Unterteilen des Volumens des Druckzylinders in eine erste Mediumskammer und eine zweite Mediumskammer und zum Verändern eines Volumens der ersten und zweiten Mediumskammer.

Eine solche eingangs genannte Reinigungsvorrichtung für eine Sensoroberfläche eines Fahrzeugs ist in EP 3 168 094 A1 beschrieben. Dabei ist vorgesehen, die Sensoroberfläche mit Druckluft und notwendigerweise auch Flüssigkeit zu beaufschlagen, wobei die Druckluft mittels eines flüssigkeitsbetriebenen Kompressionskammer erzeugt werden soll. Das heißt, es ist in jedem Fall vorgesehen, mit einer Flüssigkeitspumpe druckbeaufschlagte Flüssigkeit zu liefern einerseits direkt an eine Düse zur Beaufschlagung der Sensoroberfläche und andererseits diese Flüssigkeit zum Antreiben eines Kolbens in der Kompressionskammer zu nutzen. Darüber wird auf der dem Kolben gegenüberliegenden Seite der Kammer Druckluft erzeugt, welche wiederum einer separaten Düse zur Beaufschlagung der Sensoroberfläche mit Druckluft zugeführt wird.

Die Konzepte sind noch verbesserungswürdig, insbesondere hinsichtlich der Abhängigkeit der Reinigungsvorrichtung von einer Flüssigkeit basierten Reinigung und der damit zusätzlichen Flüssigkeitspumpe und dem einhergehenden erhöhten, apparativen und somit wartungstechnischen Aufwand. Wünschenswert ist es, eine zuverlässige und gründliche Reinigung zu gewährleisten, insbesondere unter relativ geringem, insbesondere apparativen, Aufwand. Weiterhin ist ein geringer Verbrauch von Energie und Reinigungsmedien wünschenswert, sowie ein robuster, insbesondere möglichst wartungsarmer, Aufbau.

An dieser Stelle setzt die Erfindung an, deren Aufgabe es ist, in verbesserter Weise eine Vorrichtung und ein Verfahren anzugeben, welche die oben adressierten Probleme zumindest teilweise beheben. Insbesondere soll eine Reinigungsvorrichtung und ein Druckluftsystem angegeben werden, mit denen eine zuverlässige und gründliche Reinigung gewährleistet ist, insbesondere unter relativ geringem, insbesondere apparativen, Aufwand. Insbesondere soll ein Reinigungsverfahren angegeben werden, das ein hohes Maß an Zuverlässigkeit und Gründlichkeit bei der Reinigung erreicht wobei dennoch ein apparativer Aufwand sowie der Aufwand hinsichtlich Wartung einer Reinigungsvorrichtung reduziert werden kann. Auch soll ein Verbrauch von Energie und Reinigungsmedien erreicht werden. Vorzugsweise soll ein Verbrauch an Wasser eingeschränkt oder entbehrlich sein.

Das Dokument US 2018/290631 A1 offenbart eine Reinigungsvorrichtung gemäß dem Oberbegriff des Anspruchs 1 und ein Reinigungsverfahren. Insbesondere offenbart dieses Dokument ein Sensorreinigungssystem. Dieses kann sowohl ein gasbetriebenes Reinigungssystem als auch ein flüssigbetriebenes Reinigungssystem umfassen. DE 10 2011 056 647 A1 offenbart eine Reinigungseinrichtung für Tintendruckgeräte.

Die Aufgabe, betreffend die Vorrichtung, wird durch die Erfindung zunächst mit einer Reinigungsvorrichtung des Anspruchs 1 und einem Druckluftsystem des Anspruchs 12 gelöst. Die Aufgabe, betreffend das Verfahren, wird durch die Erfindung mit einem Verfahren des Anspruchs 18 gelöst.

Die Erfindung geht aus von einer Reinigungsvorrichtung zum Beaufschlagen einer Oberfläche mit einem Mediumspuls gemäß dem Oberbegriff des Anspruchs 1, d. h. die Reinigungsvorrichtung weist auf:
- einen Druckzylinder, mit einem Druckanschluss, einem Mediumsanschluss und einem ersten Düsenanschluss, wobei
- im Druckzylinder ein Trenn- und Verdrängungsmittel mit einer ersten und/oder zweiten Druckgeberfläche angeordnet ist, zum Unterteilen des Volumens des Druckzylinders in eine erste Mediumskammer und eine zweite Mediumskammer und zum Verändern eines Volumens der ersten und zweiten Mediumskammer.

Erfindungsgemäß ist bei der Reinigungsvorrichtung dieser Art ein Schaltventil vorgesehen, das einen ersten Druckzylinderanschluss, einen ersten Mediumsquellenanschluss und einen zweiten Düsenanschluss aufweist und ausgebildet ist zum Schalten in einen ersten Schaltzustand und einen zweiten Schaltzustand, wobei weiter erfindungsgemäß
- im ersten Schaltzustand die erste Mediumskammer über den Druckanschluss mit dem ersten Mediumsquellenanschluss verbindbar ist, zum Verringern des Volumens der zweiten Mediumskammer, und
- im zweiten Schaltzustand die erste Mediumskammer über den Druckanschluss mit dem zweiten Düsenanschluss verbindbar ist, zum Vergrößern des Volumens der zweiten Mediumskammer,

- derart, dass die Oberfläche beaufschlagbar ist mit
   - einem Mediumspuls eines flüssigen Mediums, und/oder
   - einem Mediumspuls eines gasförmigen Mediums.

Die Erfindung geht von der Überlegung aus, dass ein Druckzylinder mit einem Druckanschluss, einem Mediumsanschluss und einem ersten Düsenanschluss, generell vorteilhaft ist, den Aufwand bei der Reinigung von Oberflächen gering zu halten. Im Druckzylinder ist ein Trenn- und Verdrängungsmittel mit einer ersten und/oder zweiten Druckgeberfläche angeordnet, zum Unterteilen des Druckzylinders in eine erste Mediumskammer und eine zweite Mediumskammer und zum Verändern des Volumens der ersten und zweiten Mediumskammer. Dies trifft insbesondere auf die Reinigung von Oberflächen eines Sensors oder einer Sensorabdeckung zu, für die eine saubere Oberfläche eine Voraussetzung für die ordnungsgemäße und zuverlässige Funktionsweise des Sensors ist.

Hierzu ist erfindungsgemäß vorgesehen, dass
- im ersten Schaltzustand die erste Mediumskammer über den Druckanschluss mit dem ersten Mediumsquellenanschluss verbindbar ist, zum Verringern des Volumens der zweiten Mediumskammer, und
- im zweiten Schaltzustand die erste Mediumskammer über den Druckanschluss mit dem zweiten Düsenanschluss verbindbar ist, zum Vergrößern des Volumens der zweiten Mediumskammer.

Mit Vorteil hat die Erfindung erkannt, dass eine zusätzliche Fluidpumpe für das flüssige Medium, insbesondere Wasser, entbehrlich sein kann.

Grundsätzlich lässt sich das erfindungsgemäße Konzept auch nur mit einem gasförmigen Medium umsetzen, dass der erste und zweite Schaltzustand derart ausgeführt werden, dass die Oberfläche beaufschlagbar ist mit einem Mediumspuls eines flüssigen Mediums, und/oder einem Mediumspuls eines gasförmigen Mediums.

Generell wird gemäß dem Konzept der Erfindung die Reinigungswirkung des Impulses eines Mediumspulses unter anderem durch die Masse des Mediums erreicht. Eine Aufprallgeschwindigkeit des Mediums auf die Oberfläche und ein relativ schnelles Auslösen der Beaufschlagung wird vorteilhaft erhöht. Ein schnelles Auslösen der Beaufschlagung führt - insbesondere im Gegensatz zu einer langsam kontinuierlich ansteigenden Strömung des Mediums - zu einem Auftreffen insbesondere einer begrenzten, in einem Speicher gespeicherten Luftmasse auf die Oberfläche in einem relativ kurzen Zeitraum. Der Zeitraum kann vorteilhaft eingestellt werden mittels einem vergleichsweise schnellen "Hin- und Her-Schalten" zwischen dem ersten und zweiten Schaltzustand. Auch somit wird vorteilhaft ein hoher Impuls für den Mediumspuls erreicht. Im Ergebnis wird somit auf besonders vorteilhafte Weise eine Reduktion des apparativen Aufwandes und des Aufwandes an Wasser erzielt. Damit einher geht eine Reduktion der Fehleranfälligkeit der Reinigungsvorrichtung, was zu reduzierten Wartungsintervallen und in der Konsequenz zu einer erhöhten Verfügbarkeit der Reinigungsvorrichtung führt.

Die Erfindung führt zur Lösung der Aufgabe betreffend die Vorrichtung auch auf ein Druckluftsystem des Anspruchs 12.

Das erfindungsgemäße Druckluftsystem weist mindestens eine Reinigungsvorrichtung gemäß der Erfindung auf sowie mindestens einen Sensor eines Sensorsystems, wobei der Sensor, insbesondere eine transparente Abdeckung des Sensors, eine Oberfläche aufweist. Erfindungsgemäß ist weiter vorgesehen, dass
- eine erste Mediumsquelle des Druckluftsystems über eine erste Mediumszuleitung mit dem ersten Mediumsquellenanschluss der mindestens einen Reinigungsvorrichtung verbindbar ist, und
- eine zweite Mediumsquelle über eine zweite Mediumszuleitung mit dem Mediumsanschluss der mindestens einen Reinigungsvorrichtung verbindbar ist, und
- mindestens eine Düse über eine erste Düsenzuleitung mit dem ersten Düsenanschluss und über eine zweite Düsenzuleitung mit dem zweiten Düsenanschluss der mindestens einen Reinigungsvorrichtung verbindbar ist.

Bei dem erfindungsgemäßen Druckluftsystem werden die Vorteile die sich aus der Reinigungsvorrichtung ergeben auf ein Druckluftsystem übertragen. Insbesondere ist der geringere apparative Aufwand durch Wegfall der sonst zusätzlich benötigten Fluidpumpe und die geringere Abhängigkeit von mechanischen bewegten Teilen vorteilhaft für Anwendungen in Fahrzeugen und dergleichen, insbesondere mobilen, Maschinen.

Die Erfindung führt zur Lösung der Aufgabe betreffend das Verfahren auch auf ein Reinigungsverfahren des Anspruchs 18.

Das Reinigungsverfahren sieht erfindungsgemäß die Verwendung wenigstens einer Reinigungsvorrichtung der Erfindung und/oder einem Druckluftsystem der Erfindung zum Beaufschlagen einer Oberfläche mit einem Mediumspuls vor. Erfindungsgemäß ist das Schaltventil vorgesehen, das einen ersten Druckzylinderanschluss, einen ersten Mediumsquellenanschluss und einen zweiten Düsenanschluss aufweist und in einen ersten Schaltzustand und einen zweiten Schaltzustand geschaltet wird. Erfindungsgemäß ist auch vorgesehen, dass
- im ersten Schaltzustand die erste Mediumskammer über den Druckanschluss mit dem ersten Mediumsquellenanschluss verbunden wird, zum Verringern des Volumens der zweiten Mediumskammer, und
- im zweiten Schaltzustand die erste Mediumskammer über den Druckanschluss mit dem zweiten Düsenanschluss verbunden wird, zum Vergrößern des Volumens der zweiten Mediumskammer,

- derart, dass die Oberfläche beaufschlagt wird mit
   - einem Mediumspuls eines flüssigen Mediums, und/oder
   - einem Mediumspuls eines gasförmigen Mediums.

Beim erfindungsgemäßen Reinigungsverfahren werden die Vorteile der Reinigungsvorrichtung ebenfalls, analog zum Druckluftsystem, auf ein korrespondierendes Verfahren vorteilhaft übertragen.

Die Erfindung führt zur Lösung der Aufgabe betreffend die Vorrichtung auch auf ein Fahrzeug des Anspruchs 23.

Das Fahrzeug hat dazu wenigstens eine Reinigungsvorrichtung der Erfindung und/oder ein Druckluftsystem der Erfindung und/oder ein Steuersystem mit einer Steuer- und/oder Regeleinrichtung, wobei die Steuer- und/oder Regeleinrichtung ausgebildet ist, die Schritte des Reinigungsverfahrens der Erfindung auszuführen.

Beim erfindungsgemäßen Fahrzeug werden die Vorteile des Druckluftsystems und des Steuersystems, analog auf ein korrespondierendes Fahrzeug vorteilhaft übertragen. Beim erfindungsgemäßen Steuersystem werden die Vorteile des Druckluftsystems, analog auf ein korrespondierendes Steuersystem vorteilhaft übertragen. Auch wirken sich bei einem Einsatz des erfindungsgemäßen Druckluftsystems in einem Fahrzeug der geringere Verbrauch von Energie und Reinigungsmedien vorteilhaft aus, da Energie und Reinigungsmedien in Fahrzeugen und vergleichbaren mobilen Systemen nur begrenzt vorhanden sind. Auch ist in einem Fahrzeug der Aspekt einer zuverlässigen Reinigung wichtig, da zu reinigende Sensoren häufig kritische und sicherheitsrelevante Aufgaben übernehmen.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Im Rahmen einer besonders bevorzugten Weiterbildung weist das Trenn- und Verdrängungsmittel in der ersten Mediumskammer und/oder der zweiten Mediumskammer des Druckzylinders eine erste und/oder zweite Druckgeberfläche auf, wobei die erste und/oder zweite Druckgeberfläche unterschiedlich druckbeaufschlagbar ist, insbesondere zur Erzeugung eines Druckunterschieds zur Erzeugung des Mediumspulses.

Vor allem ist aufgrund eines Überdrucks in einer der Kammern --hier in der ersten Kammer-- ein kleiner Druckluftspeicher realisiert, der sich bereits allein durch den dort herrschenden Überdruck (z. B. 3-5 Bar) entleert und somit die Oberfläche beaufschlagt. Die Impulskraft des Druckluftpulses (z. B. aus der zweiten oder ersten Mediumskammer) resultiert insbesondere aus der Expansion bzw. dem Druckausgleich über eine der Düsen.

Eine impulsartige Beaufschlagung der Oberfläche kann zwar vorteilhaft zusätzlich oder zuerst aufgrund einer Rückstellkraft des Trenn- oder Verdrängungsmittels des Druckzylinders als solchem oder eines Rückstellmittels erfolgen; diese ist im vorliegenden Szenario aber zusätzlich zu dem Effekt, der daher herrührt, dass die erste und/oder zweite Druckgeberfläche unterschiedlich druckbeaufschlagbar ist.

Die Impulskraft des Mediums aus der ersten Mediumskammer resultiert dann primär aus der Druckbeaufschlagung auf das Verdrängungsmittel. Sekundär kann dies entsprechend auch aufgrund einer Rückstellkraft resultieren falls dies konstruktionsbedingt entsprechend ausgelegt wurde. Das erste Medium besitzt somit unabhängig von weitere Kräften im Druckzylinder bereits ein Druckausgleichspotenzial zum Umgebungsdruck aufgrund des Druckunterschieds an der ersten und zweiten Druckgeberfläche. Zusätzlich kann im Laufe des Druckausgleichs dann anschließend auch die Rückstellkraft des Rückstellmittels wirken.

Insbesondere kann --muss aber nicht-- vorgesehen sein, dass die erste Mediumskammer und/oder die zweite Mediumskammer des Druckzylinders zusätzlich ein Rückstellmittel aufweist. Weiterbildend ist vorgesehen, dass die Druckgeberfläche auf Seiten der ersten Mediumskammer druckbeaufschlagbar ist und/oder über das Rückstellmittel mit einer Rückstellkraft beaufschlagbar ist.

Insbesondere kann dies bedeuten, dass die Volumenänderung der ersten und analog der zweiten Mediumskammer mittels der im Druckzylinder beweglichen Druckgeberfläche auf Seiten der ersten Mediumskammer über den im gasförmigen Medium herrschenden Druck realisiert wird. Zurückgestellt in eine Ausgangsposition wird die Druckgeberfläche wie erläutert über einen Druckunterschied, insbesondere über ein Rückstellmittel beziehungsweise über die von dem Ruckstellmittel auf die Druckgeberfläche ausgeübte Rückstellkraft, wobei das Rückstellmittel in der zweiten Mediumskammer, in der ersten Mediumskammer aber auch in beiden Mediumskammern angeordnet sein kann.

Hieraus ergibt sich der Vorteil, dass ein minimaler apparativer Aufwand einen großen Spielraum hinsichtlich der technischen Ausgestaltung der Mediumskammer ermöglicht. Beispielsweise kann das Rückstellmittel entfallen oder nur in der ersten oder nur in der zweiten Mediumskammer vorgesehen sein oder zwischen der ersten und der zweiten Mediumskammer aufgeteilt werden, um das nutzbare Volumen der zweiten Mediumskammer oder die Lebensdauer des Rückstellmittels zu optimieren.

Im Rahmen einer besonders bevorzugten Weiterbildung ist vorgesehen, dass die Oberfläche beaufschlagbar ist mit
- einem Mediumspuls des flüssigen Mediums, nämlich in dem ersten Schaltzustand mit einem ersten Mediumspuls, vorzugsweise in Form eines Wasserpulses oder dergleichen Flüssigkeitspuls, und/oder
- einem Mediumspuls des gasförmigen Mediums, nämlich in dem zweiten Schaltzustand mit einem zweiten Mediumspuls, vorzugsweise in Form eines Druckluftpulses.

Gemäß dieser Weiterbildung ist im ersten Schaltzustand des Schaltventils mittels eines impulsartigen Verschiebens der Druckgeberfläche im Druckzylinder-und somit mittels einer impulsartigen Verringerung des Volumens der zweiten Mediumskammer-- einerseits ein impulsartiges Beaufschlagen einer Oberfläche mit dem gasförmigen oder dem flüssigen Medium aus der zweiten Mediumskammer heraus zu erreichen. Weiterbildend ist vorgesehen, im zweiten Schaltzustand des Schaltventils wiederum mittels eines impulsartigen Verschiebens der Druckgeberfläche im Druckzylinder, das heißt, durch ein Rückstellen der Druckgeberfläche --und somit mittels einer impulsartigen Vergrößerung des Volumens der zweiten Mediumskammer-- andererseits ein weiteres impulsartiges Beaufschlagen einer Oberfläche mit dem gasförmigen Medium aus der ersten Mediumskammer heraus zu erreichen.

Der Begriff "impulsartig" bezeichnet im Zusammenhang der Erfindung allgemein eine plötzlich, ruckartige Beaufschlagung einer Oberfläche mit einem Medium, deren Impuls insbesondere geeignet ist, auf der Oberfläche befindliche Partikel, insbesondere Dreckpartikel, mechanisch zu lösen und zu entfernen.

Insbesondere ist vorgesehen, dass mittels der ersten Mediumskammer ein impulsartiges Leeren der zweiten Mediumskammer über den ersten Düsenanschluss bewirkbar ist. Insbesondere ist vorgesehen, dass mittels der Rückstellkraft ein impulsartiges Leeren der ersten Mediumskammer über den zweiten Düsenanschluss bewirkbar ist; dies insbesondere gegen einen Druckunterschied zwischen der ersten druckbeaufschlagter Kammer und Umgebungsdruck im Sinne eines Druckausgleichs infolge einer Expansion des gasförmigen Mediums in der ersten Mediumskammer. Insbesondere ist auch eine Impulsstärke des impulsartigen Leerens über den zweiten Düsenanschluss der ersten Mediumskammer im Sinne der genannten Expansion des gasförmigen Mediums in die Umgebung über den zweiten Düsenanschluss ebenfalls abhängig vom dort herrschenden Druck des gasförmigen Mediums.

Nach einem impulsartigen Leeren der ersten Mediumskammer über den zweiten Düsenanschluss ist vorteilhaft vorgesehen, dass das Befüllen der ersten Mediumskammer mit dem gasförmigen Medium, ein impulsartiges Leeren der zweiten Mediumskammer bewirkt. Die Rückstellkraft bewirkt vorteilhaft dann wieder anschließend ein impulsartiges Leeren der ersten Mediumskammer im obigen Sinne. Das Medium, gehalten in der ersten bzw. zweiten Mediumskammer, wird jeweils über einen ersten bzw. einen zweiten Düsenanschluss zugeführt. Die Ausführung gemäß dem Konzept der Erfindung reduziert die mechanische Komplexität vorteilhaft und erhöht zudem die Zuverlässigkeit der Reinigungsvorrichtung.

Weiterbildend ist vorgesehen, dass die zweite Mediumskammer des Druckzylinders beim impulsartigen Leeren der ersten Mediumskammer, zugleich über den Mediumsanschluss mit dem flüssigen Medium und dem gasförmigen Medium neu befüllbar ist. Konkret kann dies bedeuten, dass das impulsartige Leeren der ersten Mediumskammer, in der zweiten Mediumskammer einen Unterdruck erzeugt, wobei dieser in einem Ansaugen des gasförmigen Mediums und des flüssigen Mediums am Mediumsanschluss der zweiten Mediumskammer resultiert. Hieraus ergibt sich der Vorteil, dass das erneute Befüllen der zweiten Mediumskammer mit entweder dem gasförmigen Medium oder dem flüssigen Medium ohne eine zusätzliche Pumpe oder dergleichen technische Einrichtung erfolgt. Vorteilhaft reduziert sich somit der apparative Aufwand und erhöht sich die Zuverlässigkeit der Reinigungsvorrichtung.

Insbesondere ist vorgesehen, dass der Mediumspuls, abgegeben durch die Reinigungsvorrichtung, eine Sequenz von Mediumspulsen ist, deren Zusammensetzung und Abfolge zeitlich, insbesondere selektiv und/oder intermittierend, steuerbar ist. Dies kann konkret insbesondere durch ein Ansteuern des Schaltventils erfolgen. Durch eine zeitlich gesteuerte Beaufschlagung kann vorteilhaft in Abhängigkeit von Verschmutzungsgrad, Umgebungsbedingungen und Betriebsparametern eine optimale Reinigung der Oberfläche erreicht werden. Selektiv bedeutet insbesondere, dass zu einem Zeitpunkt immer nur ein Medium auf die Oberfläche beaufschlagt wird. Konkret kann dies bedeuten insbesondere, dass die Beaufschlagung des einen, beispielsweise gasförmigen Mediums, vollständig unterbrochen wird, und dann mit der Beaufschlagung des anderen, beispielsweise flüssigen Mediums, begonnen wird und, umgekehrt erst nach Unterbrechen der Beaufschlagung des flüssigen Mediums wieder mit der Beaufschlagung durch das gasförmige Medium fortgefahren wird. Zwischen den Beaufschlagungen können, insbesondere auch innerhalb einer Mediumssequenz, definierte Pausen liegen, beispielsweise um Dreckpartikel einzuweichen. Intermittierend bedeutet weiter insbesondere, dass die jeweiligen Mediumsströme, insbesondere die Ströme des gasförmigen Mediums und des flüssigen Mediums, jeweils ausgelöst und unterbrochen werden können.

Vorteilhaft ist vorgesehen, dass das Volumen des Druckzylinders einen durch den Druckzylinder generierbaren Volumenstrom des gasförmigen und/oder des flüssigen Mediums festlegt. Konkret kann dies bedeuten, dass durch die konstruktive Ausgestaltung des Druckzylinders auf vorteilhafte Weise ein generierbarer Volumenstrom einstellbar ist. Hierdurch entfällt die Notwendigkeit für eine komplexe Volumenstromregelung pro Medium. Somit reduziert sich der apparative Aufwand signifikant und analog die Fehleranfälligkeit der Reinigungsvorrichtung. Sollten zudem während des Betriebs der Anlage ein höherer oder ein geringerer Volumenstrom notwendig werden, ist dies durch einfachen Austausch des Druckzylinders vorteilhaft möglich. Weiterhin ist es denkbar, beispielsweise die erste Mediumskammer größer auszuführen als die zweite Mediumskammer oder umgekehrt. Somit wäre es möglich, zudem einen unterschiedlichen Volumenstrom aus der ersten beziehungsweise der zweiten Mediumskammer zu generieren. Hieraus ergibt sich der Vorteil, dass beispielsweise ein geringerer Volumenstrom des flüssigen Mediums aus der zweiten Mediumskammer generierbar ist und somit ein bedarfsgerechter, reduzierter Verbrauch des flüssigen Mediums erzielbar ist.

Eine Druckgeberfläche im Druckzylinder, die diesen in eine erste Mediumskammer und eine zweite Mediumskammer unterteilt, ist vorteilhaft Bestandteil des Trenn- und Verdrängungsmittels.

Weiterbildend ist vorgesehen, dass der Druckzylinder das Trenn- und Verdrängungsmittel aufweist, zum Bewirken des impulsartigen Leerens der zweiten Mediumskammer über den ersten Düsenanschluss, wobei die Impulsstärke des impulsartigen Leerens der zweiten Mediumskammer über den ersten Düsenanschluss über einen in der ersten Mediumskammer herrschenden Druck des gasförmigen Mediums steuerbar ist.

Es ist vorteilhafterweise vorgesehen, dass das Trenn- und Verdrängungsmittel, das Medium in der zweiten Mediumskammer impulsartig verdrängt, aufgrund eines impulsartigen Befüllens der ersten Mediumskammer mit dem gasförmigen Medium, insbesondere mit Druckluft. Eine Impulsstärke des Mediums in der zweiten Mediumskammer ist auf besonders vorteilhafte Weise über den Druck im gasförmigen Medium einstellbar, da dieser Druck maßgeblich ist für die Geschwindigkeit der Verschiebung des Trenn- und Verdrängungsmittels im Druckzylinder und somit für die generierbare Impulsstärke.

Insbesondere Druckluft ist auf einfache Weise steuer- und regelungstechnisch handhabbar, somit ergibt sich eine einfache Einstellmöglichkeit der Impulsstärke für beide Mediumsströme. Es kann in einer ersten Variante vorgesehen sein, dass das Schaltventil als ein Magnetventil ausgebildet ist und das Magnetventil einen ersten Ventilquerschnitt aufweist. Es kann in einer zweiten Variante vorgesehen sein, dass das Schaltventil als ein Doppelrückschlagventil ausgebildet ist, wobei das Doppelrückschlagventil einen zweiten Ventilquerschnitt aufweist. Insbesondere kann ein erster und/oder zweiter Ventilquerschnitt vorbestimmt sein derart, dass mittels diesem eine Impulsstärke zum Bewirken eines impulsartigen Leerens der ersten und/oder zweiten Mediumskammer festlegbar ist.

Vorteilhaft ist vorgesehen, dass das Trenn- und Verdrängungsmittel in einer ersten Variante insbesondere als ein Kolben ausgebildet ist. Weiter ist vorgesehen, dass das Trenn- und Verdrängungsmittel in einer zweiten Variante insbesondere als eine Membran ausgebildet ist. In einer dritten Variante ist vorgesehen, dass das Trenn- und Verdrängungsmittel als ein gefalteter Balg ausgebildet ist. Konkret kann dies bedeuten, dass bei der technischen Ausgestaltung des Trenn- und Verdrängungsmittels vorteilhaft ein hoher konstruktiver Freiraum besteht. Es ist somit möglich, das Trenn- und Verdrängungsmittel den jeweiligen Erfordernissen des konkreten Einsatzzwecks und Einsatzortes der Reinigungsvorrichtung anzupassen. Beispielsweise ist es über eine zweckmäßige Wahl des Trenn- und Verdrängungsmittel ebenfalls möglich, den Volumenstrom des gasförmigen und des flüssigen Mediums zu steuern. In der Ausprägung als Kolben wird ein höherer Volumenstrom ermöglicht, als in der Ausprägung als Membran, da der Kolben eine erhöhte Verschiebbarkeit innerhalb des Druckzylinders aufweist. Exemplarisch ist somit über eine Volumenreduktion der zweiten Mediumskammer, das heißt über ein vollständiges Verdrängen des Mediums aus der zweiten Mediumskammer, ein erhöhter Volumenstrom des dortigen Mediums generierbar.

Es ist zudem bevorzugt vorgesehen, dass das Rückstellmittel eine Druck- und/oder Zugfeder ist, wobei die Rückstellkraft der Druck- und/oder Zugfeder so bemessen ist, dass das Trenn- und Verdrängungsmittel in eine Ausgangsposition gelangt, sofern die Druckgeberfläche nicht druckbeaufschlagt ist. Vorteilhafterweise ermöglicht eine Ausprägung des Rückstellmittels als Druck- und/oder Zugfeder eine einfache und somit kostengünstige Möglichkeit, das gewählte Trenn- und Verdrängungsmittel in eine Ausgangsposition rückzustellen, nachdem das gasförmige Medium aus der ersten Mediumskammer abgelassen wurde, um somit einen neuen Beaufschlagungszyklus zu beginnen. Weiterhin ist es über die konstruktive Gestaltung der Druck- und/oder Zugfeder und somit über die resultierende Rückstellkraft auf vorteilhafte Weise möglich, die Ausgangslage des Trenn- und Verdrängungsmittels festzulegen und somit im Falle einer Rückführung des Trenn- und Verdrängungsmittels den generierten Unterdruck in der zweiten Mediumskammer einzustellen. Dieser hat wiederum einen Einfluss auf den Volumenstrom des somit angesaugten Mediums, welches die zweite Mediumskammer wieder befüllt vor Auslösung des nachfolgenden Beaufschlagungszyklus. Weiterhin hat die Ausgestaltung der Druck- und/oder Zugfeder einen Einfluss auf die erzielbare Geschwindigkeit der Pulsfolge der einzelnen Beaufschlagungen mit dem gasförmigen und dem flüssigen Medium. Es zeigt sich, dass eine geeignete Wahl des Druckverhältnisses zur Umgebung ebenfalls einen Einfluss auf die erzielbare Geschwindigkeit der Pulsfolge der einzelnen Beaufschlagungen mit dem gasförmigen und dem flüssigen Medium hat. Ferner bestimmt dieser Druckunterschied die erzielbare Reinigungskraftinsofern maximale Impulskraft des Impulses eines Mediumpulses auf die Oberfläche-- mit welcher einzelne Schmutzpartikel gelöst werden können. Ein Einstellen der Geschwindigkeit ist somit vorteilhafterweise möglich mit dem Konzept der Erfindung.

Weiterbildend ist vorgesehen, dass das Schaltventil in einer ersten Variante insbesondere als ein Magnetventil ausgebildet ist und dieses einen ersten vorbestimmten Ventilquerschnitt aufweist. Es ist zudem weiter vorgesehen, dass das in einer zweiten Variante Schaltventil alternativ als ein Doppelrückschlagventil ausgebildet ist, wobei das Doppelrückschlagventil einen zweiten vorbestimmten Ventilquerschnitt aufweist. Es hat sich als vorteilhaft erwiesen, dass der zweite vorbestimmte Ventilquerschnitt größer ist als der erste Ventilquerschnitt des Magnetventils. Insbesondere kann das Doppelrückschlagventil auch als Schnellentlüftungsventil ausgebildet sein. Dies bedeutet, dass das Schaltventil vorteilhaft entweder als Magnetventil ausgebildet sein kann, wobei diese Ventilart insbesondere steuer- und regelungstechnisch einfach zu handhaben ist oder, als ein Doppelrückschlagventil beziehungsweise Schnellentlüftungsventil mit einem größeren Ventilquerschnitt ausgebildet sein kann, wobei diese Konfiguration ebenfalls das Erzeugen des Druckluftpulses ermöglicht. Somit ergibt sich bei der konkreten technischen Ausgestaltung der Reinigungsvorrichtung vorteilhaft die Möglichkeit, das Schaltventil gemäß den zu erwartenden Einsatzbedingungen anzupassen.

Insbesondere ist vorgesehen, dass das flüssige Medium mit einem Zusatzmittel, insbesondere einer Flüssigkeit wie z. B. eine Reinigungs- und/oder Frostschutzflüssigkeit, versetzbar ist. Hierdurch wird auf vorteilhafte Weise die Reinigungswirkung des zweiten Mediums, insbesondere Wasser, erhöht. Beispielsweise ist es denkbar, dass ölbehaftete Verunreinigungen die zu beaufschlagende Oberfläche benetzen. Wasser alleine hätte in dieser Situation eine deutlich geringere Reinigungswirkung als ein Gemisch aus Wasser und einem Reinigungsmittel, insbesondere einem fett- und öllösenden Reinigungsmittel. Zudem verhindert ein Versetzen des flüssigen Mediums mit einem Frostschutzmittel ein Einfrieren der Reinigungsvorrichtung bei tiefen Temperaturen. Somit bleibt die Reinigungsvorrichtung auch im Winter einsetzbar. Vorteilhaft kann das flüssige Medium auch beheizbar sein. Zusätzlich oder alternativ können auch einzelne Komponenten der Reinigungsvorrichtung wie Mediumsleitungen, Schläuche oder dergleichen beheizbar sein.

In einer bevorzugten Weiterbildung ist weiter vorgesehen, dass die Reinigungsvorrichtung die Oberfläche mit einem gasförmigen Medium oder einem flüssigen Medium oder einem gasförmigen Medium und einem flüssigen Medium beaufschlagt. Konkret kann dies bedeuten, dass die Reinigungsanlage ebenfalls in der Lage ist, die Oberfläche vor allem nur mit dem gasförmigen Medium zu beaufschlagen. Flüssiges Medium ist bevorzugt nur in Verbindung mit dem gasförmigen Medium --also zur Wasser- und Luftreinigung-- von der Reinigungsvorrichtung abzugeben. Insbesondere bei schwerwiegender Verschmutzung der zu beaufschlagenden Oberfläche ist es vorteilhaft, beispielsweise erst mehrere Reinigungszyklen mit dem flüssigen Medium --insbesondere mit Wasser beziehungsweise einem Gemisch aus Wasser und einem Reinigungsmittelvorzunehmen, bevor eine Anzahl an Reinigungszyklen nur mit dem gasförmigen Medium, insbesondere Druckluft, durchgeführt wird. Somit ist es auf einfache Weise möglich, auch signifikante Verschmutzungen von der Oberfläche zu lösen. Alternativ kann ein reines Beaufschlagen mit Druckluft aber auch der Trocknung der Oberfläche dienen.

In einer bevorzugten Weiterbildung ist weiter vorgesehen, dass die Reinigungsvorrichtung weiter ein zweites Schaltventil aufweist, mit einem zweiten Druckzylinderanschluss, einem zweiten Mediumsquellenanschluss und einem dritten Mediumsquellenanschluss, zum Schalten eines ersten Schaltzustandes und eines zweiten Schaltzustandes. Im ersten Schaltzustand des zweiten Schaltventils ist die zweite Mediumskammer des Druckzylinders über den Mediumsanschluss mit dem zweiten Mediumsquellenanschluss verbindbar und, im zweiten Schaltzustand des zweiten Schaltventils wiederum mit dem dritten Mediumsquellenanschluss verbindbar. Konkret kann dies bedeuten, dass dem Mediumsanschluss des Druckzylinders ein weiteres Schaltventil vorgeschaltet ist, um ein Befüllen der zweiten Mediumskammer mit einem Medium aus der zweiten beziehungsweise dritten Mediumsquelle zu steuern. Die erste und zweite Mediumsquelle stellt dabei ein gasförmiges oder flüssiges Medium bereit. Denkbar ist hier aber auch ein Mehrphasengemisch, insbesondere Wasserdampf. Hierbei ergibt sich der Vorteil, dass auf einfache Weise ein Befüllen der zweiten Mediumskammer mit einem gasförmigen, einem flüssigen oder einem Mehrphasengemisch realisierbar ist. Der insbesondere apparative Aufwand bleibt gering.

In einer bevorzugten Weiterbildung des Druckluftsystems ist vorgesehen, dass ein erstes Rückschlagventil in der ersten Düsenzuleitung und/oder ein zweites Rückschlagventil in der zweiten Mediumszuleitung angeordnet ist. Ein erstes und/oder zweites Rückschlagventil stellt vorteilhaft einen Schwelldruck zur Verfügung, ab dem eine Abgabe eines Mediumpulses zur Düse bzw. eines Mediums, insbesondere Mediumspulses, zum Druckzylinder erfolgt. Außerdem verhindert das erste und/oder zweite Rückschlagventil ein ungewolltes Ansaugen einer Umgebungsluft über die erste Düse und das Zurückströmen des zweiten Mediums von der zweiten Mediumskammer in die zweite Mediumsquelle.

In einer bevorzugten Weiterbildung des Druckluftsystems ist vorgesehen, dass in einer ersten Variante die mindestens eine Düse mit einer gemeinsamen Auslassöffnung für das gasförmige und flüssige Medium ausgebildet ist.

In einer zweiten Variante ist vorgesehen, dass die mindestens eine Düse mit separaten Auslassöffnungen für das gasförmige Medium und das flüssige Medium ausgebildet ist.

In einer dritten Variante ist vorgesehen, dass das Druckluftsystem zwei Düsen aufweist, nämlich eine erste und zweite Düse. Vorteilhaft ist eine erste Düse über die erste Düsenzuleitung mit dem ersten Düsenanschluss und eine zweite Düse über die zweite Düsenzuleitung mit dem zweiten Düsenanschluss der mindestens einen Reinigungsvorrichtung verbindbar. Vorteilhaft ist in der ersten Düse das gasförmige Medium und in der zweiten Düse das flüssige Medium förderbar ist.

Konkret kann dies bedeuten, dass die konstruktive Ausgestaltung der konkreten Düsenkonfiguration vorteilhaft dem jeweiligen Einsatzzweck flexibel angepasst werden kann. Beispielsweise reduziert eine Variante mit einer Düse und einer Auslassöffnung den apparativen Aufwand und reduziert damit Gewicht und Kosten. Eine Variante mit separaten Auslassöffnungen für das gasförmige Medium und das flüssige Medium bietet den Vorteil, dass der Austrittswinkel der Medien relativ zueinander und zu der zu beaufschlagenden Oberfläche besonders vorteilhaft gewählt werden kann. Insbesondere ist es so möglich, das gasförmige Medium unter einem anderen Winkel einwirken zu lassen als das flüssige Medium. Hierdurch lässt sich beispielsweise der Wirkungsgrad des Reinigungsvorganges vorteilhaft erhöhen und an den jeweiligen Einsatzzweck anpassen.

Insbesondere ist vorgesehen, dass die erste Mediumsquelle eine Druckluftquelle, insbesondere ein Kompressor, ist und die zweite Mediumsquelle ein Fluidtank, insbesondere ein Wassertank, ist. Konkret kann dies bedeuten, dass das Druckluftsystem in einer derartigen Weiterbildung vorteilhaft in ein Fahrzeug oder dergleichen mobiles System integriert werden kann, da ein Fahrzeug in der Regel bereits einen Kompressor sowie einen Wassertank aufweist. Auf diese Weise werden vorteilhaft notwendige konstruktive Änderungen am Fahrzeug oder dergleichen mobiles System minimiert.

Weiterbildend ist vorgesehen, dass die erste Mediumsquelle einem anderen Primärzweck dient, insbesondere der Versorgung einer Luftfederanlage oder dergleichen Pneumatikanlage. In einer derartigen Weiterbildung kann vorteilhaft eine bereits vorhandene Mediumsquelle, insbesondere Druckluftquelle, zur Versorgung der Reinigungsvorrichtung genutzt werden. Dies ist insbesondere bei einem Einsatz in einem Fahrzeug oder dergleichen mobilen System vorteilhaft, da die Anzahl der benötigten Komponenten reduziert wird und somit Gewicht, Kosten und Energie eingespart werden können.

Vorteilhaft ist weiter vorgesehen, dass die zweite Mediumsquelle einem anderen Primärzweck dient, insbesondere der Versorgung einer Scheibenreinigungsanlage oder dergleichen Reinigungsanlage. In einer derartigen Weiterbildung kann vorteilhaft eine bereits vorhandene Mediumsquelle, insbesondere Flüssigkeits- und/oder Reinigungsmittelquelle, zur Versorgung der Reinigungsvorrichtung genutzt werden. Dies ist insbesondere bei einem Einsatz in einem Fahrzeug oder dergleichen mobilen System vorteilhaft, da die Anzahl der benötigten Komponenten reduziert wird und somit Gewicht, Kosten und Energie eingespart werden können.

In einer bevorzugten Weiterbildung des Druckluftsystems ist vorgesehen, dass der Sensor ein optischer Sensor, insbesondere ein Umgebungserfassungssensor ist, beispielsweise ein LIDAR-Sensor, ein Radar-Sensor, eine Kamera oder dergleichen. In einer derartigen Weiterbildung ist eine Reinigungsvorrichtung gemäß dem Konzept der Erfindung insbesondere vorteilhaft, da die regelmäßige Reinigung der Sensoroberfläche die Funktionsweise des Sensors verbessert, insbesondere, da die optischen Eigenschaften des Sensors von der Transparenz und/oder Transluzenz der Sensoroberfläche abhängen. Weiterbildend ist vorgesehen, dass das Druckluftsystem zusätzlich zu der zweiten Mediumsquelle eine dritte Mediumsquelle über die zweite Mediumszuleitung mit dem Mediumsanschluss der mindestens einen Reinigungsvorrichtung verbindbar ist, wobei die dritte Mediumsquelle die Umgebungsluft ist. Konkret kann dies bedeuten, dass die zweite Mediumskammer mit einem gasförmigen Medium, das heißt, mit der Umgebungsluft, befüllt werden kann. Hierbei ergibt sich insbesondere der Vorteil, dass das dritte Medium nicht in einem Tank oder dergleichen Behälter vorgehalten werden muss. Der apparative Aufwand wird somit vorteilhaft reduziert.

Betreffend das Reinigungsverfahren zum Reinigen der Oberfläche ist vorteilhaft vorgesehen, dass
- im ersten Schaltzustand des Schaltventils, ein impulsartiges Aufladen der ersten Mediumskammer des Druckzylinders mit dem gasförmigen Medium, insbesondere Druckluft erfolgt,
- ein impulsartiges Verdrängen des gasförmigen Mediums, insbesondere Druckluft, oder des flüssigen Mediums, insbesondere Wasser, aus der zweiten Mediumskammer des Druckzylinders; und
- ein impulsartiges Beaufschlagen der Oberfläche mit dem gasförmigen Medium, insbesondere Druckluft, oder mit dem flüssigen Medium, insbesondere Wasser, aus der zweiten Mediumskammer des Druckzylinders erfolgt.

Betreffend das Reinigungsverfahren ist auch vorteilhaft vorgesehen, dass
- im zweiten Schaltzustand des Schaltventils ein impulsartiges Ablassen des gasförmigen Mediums, insbesondere Druckluft, aus der ersten Mediumskammer des Druckzylinders erfolgt; und
- ein impulsartiges Beaufschlagen der Oberfläche mit dem gasförmigen Medium, insbesondere Druckluft, aus der ersten Mediumskammer des Druckzylinders. Auch hier ergeben sich die Vorteile analog zu den Vorteilen der Reinigungsvorrichtung.

Im Rahmen einer vorteilhaften Weiterbildung des Reinigungsverfahrens sind weiter die Schritte vorgesehen
- Rückführen der Druckgeberfläche des Trenn- und Verdrängungsmittels, insbesondere des Kolbens oder dergleichen in die Ausgangslage, mittels der Rückstellkraft; und
- automatischem Auffüllen der zweiten Mediumskammer des Druckzylinders mit dem gasförmigen Medium, insbesondere Druckluft, oder dem flüssigen Medium, insbesondere Wasser, durch Erzeugen eines Unterdrucks in der zweiten Mediumskammer des Druckzylinders mittels des Rückführens der Druckgeberfläche des Trenn- und Verdrängungsmittels in die Ausgangslage.

In einer Weiterbildung des Reinigungsverfahrens und der Reinigungsvorrichtung bzw. dem Druckluftsystem ist vorgesehen, dass das Beaufschlagen einer Oberfläche mit einem Mediumspuls, mit einem Mediumspuls erfolgt und der Mediumspuls Teil einer Sequenz von Mediumspulsen ist, insbesondere wobei eine Zusammensetzung und/oder Abfolge der Sequenz von Mediumspulsen steuerbar ist, vorzugsweise zeitlich, selektiv und/oder intermittierend steuerbar ist. Die Weiterbildung basiert auf der Erkenntnis, dass die Beaufschlagung einer zu reinigenden Fläche mit einem Mediumspuls erfolgen kann, insbesondere einer Abfolge von mindestens zwei selektiv gesteuerten und in jeweils einem Strahl auf die Oberfläche geleiteten gasförmigen und/oder flüssigen Medien. Dies kann, muss aber nicht, in der Art einer oder mehrerer Pulse erfolgen, das heißt impulsartig, und führt zu einer hohen Reinigungswirkung. Der Begriff "selektiv gesteuert" meint hier, eine wechselseitige Abfolge eines Beaufschlagens mit einem Fluidpuls wie beispielsweise einem Wasserpuls, gefolgt von einem Beaufschlagen mit einem oder mehreren Druckluftpulsen.

Insbesondere ist bei dem Reinigungsverfahren vorgesehen, dass der Druckzylinder ausgebildet ist, sequenziell in der ersten Mediumskammer entweder das gasförmige Medium oder in der zweiten Mediumskammer das flüssige Medium und das gasförmige Medium zu halten. Dies bedeutet konkret, dass der Druckzylinder als eine Art Wechselspeicher fungiert, wobei nach Abgabe des Mediums aus der ersten Mediumskammer, die zweite Mediumskammer das nachfolgend abzugebende Medium speichert und umgekehrt. Hieraus ergibt sich der Vorteil, dass zusätzliche Mediumsspeicher oder dergleichen redundant sind. Der apparative Aufwand wird folglich vorteilhaft reduziert.

Hinsichtlich des Fahrzeugs ist es vorteilhaft, dass eine Pneumatikanlage zur Versorgung der ersten Mediumsquelle mit dem gasförmigen Medium an das Druckluftsystem angeschlossen ist und, eine Scheibenreinigungsanlage zur Versorgung der zweiten Mediumsquelle mit dem flüssigen Medium an das Druckluftsystem angeschlossen ist. Es ergibt sich bei dem Fahrzeug insbesondere der Vorteil, dass auf zusätzliche Fluidtanks für die Druckluft und das Wasser weitgehend entbehrlich sind. Dies reduziert vorteilhafterweise den apparativen Aufwand und somit die Fehleranfälligkeit des Systems und in der Folge ebenfalls die Kosten.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: die schematische Ansicht einer bevorzugten Ausführungsform einer Reinigungsvorrichtung - im Detail X eine Pulssequenz von Mediumspulsen,
- Fig. 2A: die schematische Ansicht einer weiteren bevorzugten Ausführungsform eines Druckzylinders,
- Fig. 2B: die schematische Ansicht einer weiteren bevorzugten Ausführungsform eines Druckzylinders,
- Fig. 3A: die schematische Ansicht einer weiteren bevorzugten Ausführungsform einer Reinigungsvorrichtung, insbesondere mit einem Magnetventil,
- Fig. 3B: zeigt schematisch einen ersten Schaltzustand eines Magnetventils einer bevorzugten Ausführungsform einer Reinigungsvorrichtung,
- Fig. 3C: zeigt schematisch einen zweiten Schaltzustand eines Magnetventils einer bevorzugten Ausführungsform einer Reinigungsvorrichtung,
- Fig. 4: eine schematische Darstellung eines Druckluftsystems, insbesondere mit einem Doppelrückschlagventil,
- Fig. 5: eine schematische Darstellung eines Druckluftsystems gemäß dem Konzept der Erfindung mit einem zweiten Schaltventil, insbesondere einem zweiten Magnetventil,
- Fig. 6: einen Ablauf eines bevorzugten Reinigungsvorganges in einer Ausführungsform,
- Fig. 7: eine schematische Darstellung eines Steuersystems in einer Ausführungsform,
- Fig. 8: eine schematische Darstellung eines Fahrzeugs aufweisend ein Sensorsystem in einer Ausführungsform.

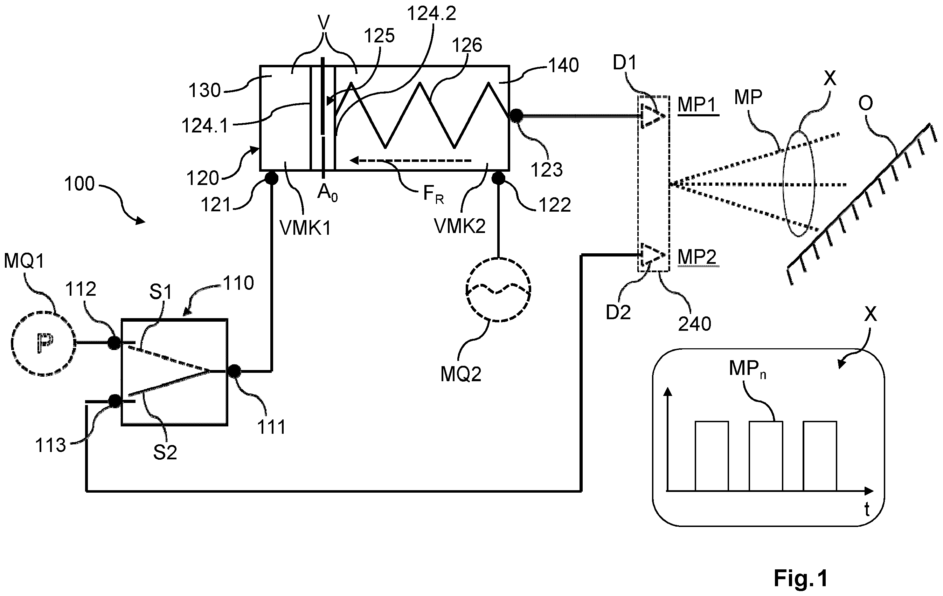

Fig. 1 zeigt die schematische Ansicht einer Ausführungsform der Reinigungsvorrichtung 100 zum Beaufschlagen einer Oberfläche O mit einem Mediumspuls MP gemäß dem Konzept der Erfindung, welche in der vorliegenden Form ein Schaltventil 110 aufweist. Das Schaltventil 110 wiederum weist einen Druckzylinderanschluss 111, einen ersten Mediumsquellenanschluss 112 und einen zweiten Düsenanschluss 113 auf und ist dazu ausgebildet, eine Verbindung zwischen diesen Anschlüssen herzustellen.

In einem ersten Schaltzustand S1, in Fig. 1 als gestrichelte Linie gezeigt, ist über das Schaltventil 110 eine Verbindung zwischen dem ersten Mediumsquellenanschluss 112 und dem Druckzylinderanschluss 111 herstellbar. In einem zweiten Schaltzustand S2, in Fig. 1 als durchgezogene Linie gezeigt, ist über das Schaltventil 110 wiederum eine Verbindung zwischen dem Druckzylinderanschluss 111 und dem zweiten Düsenanschluss 113 herstellbar. Der zweite Düsenanschluss 113 ist dann weiter mit einer Anzahl an Düsen D2 verbindbar, wobei die Anzahl in Fig. 1 symbolisch mit der zweiten Düse D2 angedeutet ist.

Das Schaltventil 110 ist zudem über den Druckzylinderanschluss 111 verbunden mit einem Druckanschluss 121 eines Druckzylinders 120. Dieser Druckzylinder 120 weist zudem einen Mediumsanschluss 122 und einen ersten Düsenanschluss 123 auf. Der erste Düsenanschluss 123 ist ebenfalls weiter mit einer Anzahl an Düsen D1 verbindbar, wobei die Anzahl in Fig. 1 symbolisch mit der ersten Düse D1 angedeutet ist.

Vorliegend weist die in Fig. 1 schematisch gezeigte Reinigungsvorrichtung 100 weiter eine erste und zweite Druckgeberfläche 124.1, 124.2 eines Trenn- und Verdrängungsmittels 125 auf, das den Druckzylinder 120 in eine erste Mediumskammer 130 und eine zweite Mediumskammer 140 unterteilt. Der ersten Mediumskammer 130 ist dabei der Druckanschluss 121 zugeordnet und der zweiten Mediumskammer 140 der Mediumsanschluss 122 und der erste Düsenanschluss 123 zugeordnet.

Im Rahmen dieser Ausführungsform weist das Trenn- und Verdrängungsmittel 125 in der ersten Mediumskammer 130 und der zweiten Mediumskammer 140 des Druckzylinders 120 somit eine erste und/oder zweite Druckgeberfläche 124.1, 124.2 auf, wobei die erste und/oder zweite Druckgeberfläche 124.1, 124.2 abwechselnd unterschiedlich druckbeaufschlagbar ist, nämlich zur Erzeugung eines Druckunterschieds zur Erzeugung des Mediumspulses. Vor allem ist dann aufgrund eines Überdrucks in einer der Kammern --hier in der ersten Mediumskammer 130-- ein kleiner Druckluftspeicher realisiert, der sich oder die andere Kammer bereits allein durch den in der einen Kammer herrschenden Überdruck (z. B. 3-5 Bar) entleert und somit die Oberfläche O --hier aus der zweiten Mediumskammer 140-- beaufschlagt. In umgekehrter Richtung kann vor allem aufgrund eines Überdrucks in einer der Kammern --dann in der zweiten Mediumskammer 140-- ein kleiner Druckluftspeicher realisiert sein, der sich bereits allein durch den dort herrschenden Überdruck (z. B. 3-5 Bar) entleert und somit die Oberfläche O aus der ersten Mediumskammer 130 beaufschlagt.

Die Impulskraft des Druckluftpulses (z. B. aus der zweiten oder ersten Mediumskammer 140, 130) resultiert insbesondere aus der Expansion bzw. dem Druckausgleich über eine der Düsen D1, D2.

Eine impulsartige Beaufschlagung der Oberfläche kann zwar vorteilhaft zusätzlich oder zuerst aufgrund einer Rückstellkraft F_{R} des Trenn- oder Verdrängungsmittels 125 des Druckzylinders 120 als solchem oder eines Rückstellmittels 126 erfolgen; diese ist im vorliegenden Szenario aber zusätzlich zu dem Effekt, der daher herrührt, dass die erste und/oder zweite Druckgeberfläche 124.1, 124.2 unterschiedlich druckbeaufschlagbar ist.

Die Impulskraft des Mediums aus der ersten Mediumskammer 130 resultiert dann primär aus der Druckbeaufschlagung auf das Verdrängungsmittel 125. Sekundär kann dies entsprechend auch aufgrund einer Rückstellkraft F_{R} eines Rückstellmittels 126 resultieren falls dies konstruktionsbedingt entsprechend ausgelegt wurde. Das erste Medium besitzt somit unabhängig von weitere Kräften im Druckzylinder 120 bereits ein Druckausgleichspotenzial zum Umgebungsdruck aufgrund des Druckunterschieds an der ersten und zweiten Druckgeberfläche 124.1, 124.2. Zusätzlich kann im Laufe des Druckausgleichs dann anschließend auch die F_{R} eines Rückstellmittels 126 wirken, insbesondere zur Erzeugung eines Druckunterschieds zur Erzeugung des Mediumspulses.

Weiterhin ist in der Ausführungsform der Fig. 1 somit ein Rückstellmittel 126 gezeigt, welches vorliegend in der zweiten Mediumskammer 140 angeordnet ist und eine Rückstellkraft F_{R} generiert; es kann in einer anderen Ausführungsform jedoch auch ein Wasserdruck für die Rückstellkraft sorgen. Vorliegend wirkt diese Rückstellkraft F_{R} wiederum auf die zweite Druckgeberfläche 124.2, die in Fig. 1 in einer Ausgangslage A₀ gezeigt ist.

Im ersten Schaltzustand S1 des Schaltventils 110 ist also die erste Mediumskammer 130 über den Druckanschluss 121 mit dem ersten Mediumsquellenanschluss 112 verbindbar bzw. verbunden, zum Verringern des Volumens V der zweiten Mediumskammer 140, und im zweiten Schaltzustand S2 des Schaltventils 110 ist die erste Mediumskammer 130 über den Druckanschluss 121 mit dem zweiten Düsenanschluss 113 verbindbar bzw. verbunden ist, zum Vergrößern des Volumens V der zweiten Mediumskammer 140.

Dies erfolgt derart, dass die Oberfläche O beaufschlagbar ist mit
- einem Mediumspuls MP eines flüssigen Mediums M2, und/oder
- einem Mediumspuls MP eines gasförmigen Mediums M1 und wird bei dieser Ausführungsform konkret wie folgt umgesetzt. Die Oberfläche O wird beaufschlagt mit

- einem Mediumspuls MP des flüssigen Mediums M2, nämlich in dem ersten Schaltzustand S1 mit einem ersten Mediumspuls MP1, vorzugsweise in Form eines Wasserpulses oder dergleichen Flüssigkeitspuls, und/oder
- einem Mediumspuls MP des gasförmigen Mediums M1, nämlich in dem zweiten Schaltzustand mit einem zweiten Mediumspuls MP2, vorzugsweise in Form eines Druckluftpulses.

Befindet sich das Schaltventil 110 also in dem ersten Schaltzustand S1, so beaufschlagt eine erste Mediumsquelle MQ1, insbesondere eine Druckluftquelle, die in Fig. 1 nur angedeutet ist, den ersten Mediumsquellenanschluss 112 des Schaltventils 110 mit einem gasförmigen Medium M1, insbesondere mit Druckluft. Dieses gasförmige Medium M1 wird dann über den Druckzylinderanschluss 111 des Schaltventils 110 an den Druckanschluss 121 des Druckzylinders 120 geleitet und expandiert anschließend in der ersten Mediumskammer 130 impulsartig.

Hierdurch verschiebt sich die erste und zweite Druckgeberfläche 124.1, 124.2 unter Kompression des Rückstellmittels in Richtung des ersten Düsenanschlusses 123 des Druckzylinders 120. Dadurch kommt es zu einer impulsartigen Reduktion des Volumens der zweiten Mediumskammer 140 mittels der zweiten Druckgeberfläche 124.2. Das in der zweiten Mediumskammer 140 befindliche gasförmige Medium M1 oder flüssige Medium M2 beaufschlagt somit impulsartig den ersten Düsenanschluss 123 und wird über diesen an eine hier nur angedeutete erste Düse D1 gefördert. Diese beaufschlagt dann die Oberfläche O mit einem ersten Mediumspuls MP aus gasförmigem Medium M1 oder flüssigen Medium M2.

Wird das Schaltventil 110 anschließend in den zweiten Schaltzustand S2 geschaltet, wobei das Schaltventil hier eine Verbindung herstellt zwischen dem Druckzylinderanschluss 111 und dem zweiten Düsenanschluss 113, so wird dem druckbeaufschlagten gasförmigen Medium M1 ein Strömungspfad zu einer zweiten, hier ebenfalls nur angedeuteten Düse D2, eröffnet. Im Vergleich zum ersten Schaltzustand S1 des Schaltventils 110, tritt somit eine Umkehrung der Strömungsrichtung ein. Das gasförmige Medium M1 in der ersten Mediumskammer 130 wird zudem über das Rückstellmittel 126 und die zweite Druckgeberfläche 124.2 beaufschlagt, mit einer Rückstellkraft F_{R}. In der Folge strömt das gasförmige Medium M1 über den zweiten Düsenanschluss 113 des Schaltventils 110 impulsartig einer angedeuteten zweiten Düse zu. Diese beaufschlagt dann die Oberfläche O mit einem zweiten Mediumspuls MP aus gasförmigem Medium M1. Über die Rückstellkraft F_{R} des Rückstellmittels 126 gelangt die Druckgeberfläche 124 zudem wieder in eine Ausgangslage A₀ zurück. In der Folge entsteht in der zweiten Mediumskammer 140 ein Unterdruck, über den ein Ansaugen eines gasförmigen Mediums M1 oder eines flüssigen Mediums M2 am Mediumsanschluss 122, und somit ein Neubefüllen der zweiten Mediumskammer 140 des Druckzylinders 120 bewirkbar ist.

Der skizzierte Prozess des Beaufschlagens einer Oberfläche O mit einem Mediumspuls MP des gasförmigen Mediums M1 oder des flüssigen Mediums M2 über die zweite Mediumskammer 140 im ersten Schaltzustand S1 des Schaltventils 110, und des anschließenden Beaufschlagens einer Oberfläche O mit einem Mediumspuls MP des gasförmigen Mediums M1 über die erste Mediumskammer 130 im zweiten Schaltzustand S2 des Schaltventils 110, kann über eine geeignete Steuerung des Schaltventils 110 zu einer Sequenz von Mediumspulsen MPₙ ausgedehnt werden. Das Beaufschlagen der Oberfläche O erfolgt somit mit einem Mediumspuls MP und der Mediumspuls MP ist Teil einer Sequenz von Mediumspulsen MPₙ, die im Detail X der Fig. 1 dargestellt sind. Insbesondere ist eine Zusammensetzung und/oder Abfolge der Sequenz von Mediumspulsen MPₙ steuerbar, vorzugsweise zeitlich, selektiv und/oder intermittierend steuerbar.

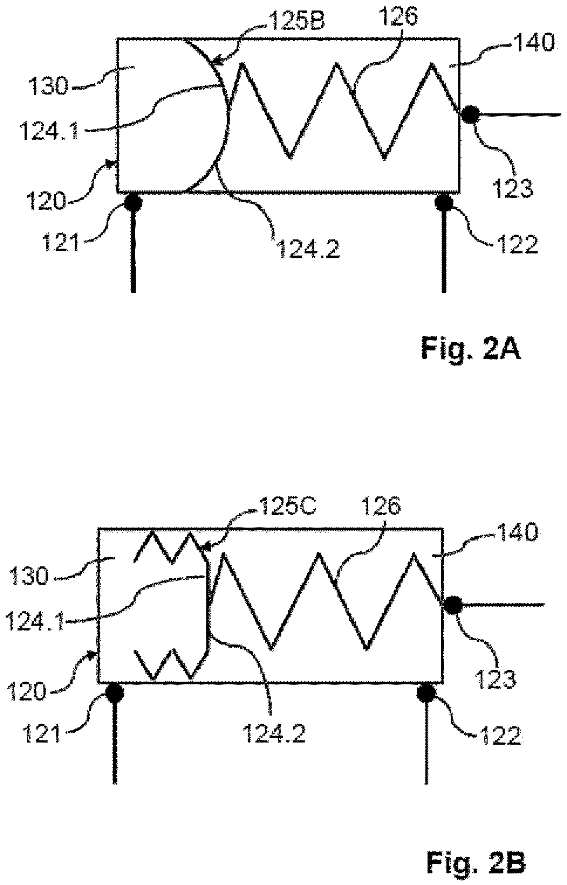

Fig. 2A zeigt die schematische Ansicht einer weiteren bevorzugten Ausführungsform insbesondere des Druckzylinders 120 der Reinigungsvorrichtung 100. Vorliegend weist die in Fig. 2A schematisch gezeigte Ausführungsform wiederum einen Druckanschluss 121, einen Mediumsanschluss 122 und einen ersten Düsenanschluss 123 auf sowie weiter eine erste und zweite Druckgeberfläche 124.1, 124.2, die den Druckzylinder in eine erste Mediumskammer 130 und eine zweite Mediumskammer 140 unterteilt sowie ein Rückstellmittel 126. Weiter weist die gezeigte Ausführungsform ein Trenn- und Verdrängungsmittel, vorliegend in der Form einer Membran 125B, auf. Die Membran 125B ist auf Seiten der ersten Mediumskammer 130 druckbeaufschlagbar; jedenfalls aber unterschiedlich druckbeaufschlagbar auf Seiten der ersten und zweiten Mediumskammer 130, 140. Auf Seiten der zweiten Mediumskammer 140 ist die Membran 125B zusätzlich mittels des Rückstellmittels 126 mit einer Rückstellkraft F_{R} beaufschlagbar. Der Impuls des in der ersten Mediumskammer 130 expandierenden druckbeaufschlagten gasförmigen Mediums M1 ist über die Membran 125B impulsartig auf das gasförmige Medium M1 oder das flüssige Medium M2 in der zweiten Mediumskammer 140 übertragbar. Die Membran 125B wölbt sich dabei in Richtung der zweiten Mediumskammer 140 und verringert in der Folge dessen Volumen. Somit beaufschlagt das gasförmige Medium M1 oder das flüssige Medium M2 in der zweiten Mediumskammer 140 den ersten Düsenanschluss 123 impulsartig, wobei das gasförmige Medium M1 oder das flüssige Medium M2 über den ersten Düsenanschluss 123 einer hier nicht gezeigten Düse zugeführt wird, zum Beaufschlagen einer Oberfläche O mit einem Mediumspuls MP des gasförmigen Mediums M1 oder des flüssigen Mediums M2 der zweiten Mediumskammer 140. Anschließend bewirkt das Rückstellmittel 126 eine Rückführung der Membran 125B, wobei in der Folge in der zweiten Mediumskammer 140 ein Unterdruck entsteht, über den ein Ansaugen eines gasförmigen Mediums M1 oder eines flüssigen Mediums M2 am Mediumsanschluss 122 und somit ein Neubefüllen der zweiten Mediumskammer 140 des Druckzylinders 120 bewirkbar ist.

Fig. 2B zeigt zudem die schematische Ansicht einer weiteren bevorzugten Ausführungsform insbesondere des Druckzylinders 120 der Reinigungsvorrichtung 100. In der gezeigten Ausführungsform ist das Trenn- und Verdrängungsmittel vorliegend in der Form eines gefalteten Balgs 125C ausgebildet. Die für die in Fig. 2A gezeigte Ausführungsform mit einer Membran 125B gemachte Darstellung der technischen Funktion, gilt für den gefalteten Balg 125C analog.

Auch bei diesen Ausführungsformen der Fig. 2A und Fig. 2B ist also im ersten Schaltzustand S1 des Schaltventils 110 also die erste Mediumskammer 130 über den Druckanschluss 121 mit dem ersten Mediumsquellenanschluss 112 verbindbar bzw. verbunden, zum Verringern des Volumens V der zweiten Mediumskammer 140, und im zweiten Schaltzustand S2 des Schaltventils 110 ist die erste Mediumskammer 130 über den Druckanschluss 121 mit dem zweiten Düsenanschluss 113 verbindbar bzw. verbunden ist, zum Vergrößern des Volumens V der zweiten Mediumskammer 140.

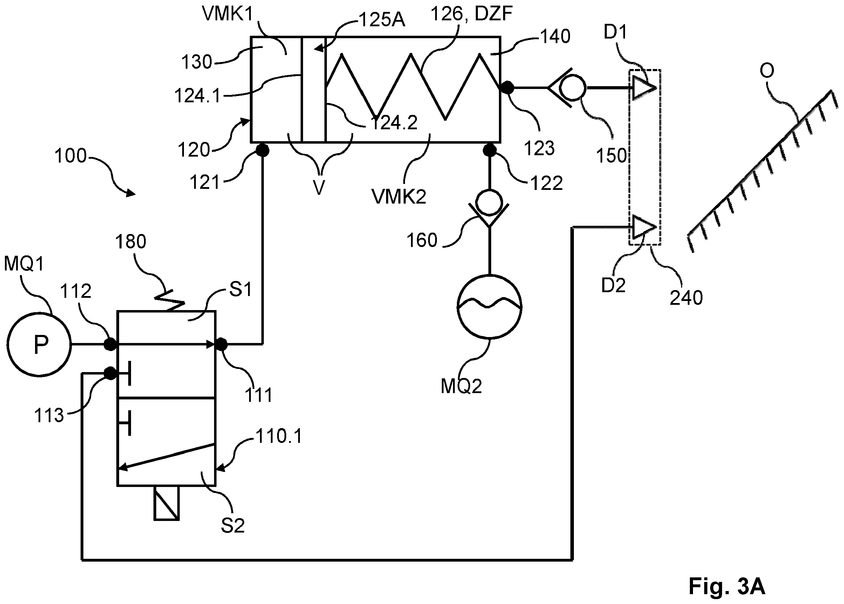

Fig. 3A zeigt die schematische Ansicht einer bevorzugten Ausführungsform der Reinigungsvorrichtung 100 zum Beaufschlagen einer Oberfläche O mit einem Mediumspuls MP, wobei in der vorliegenden Form das Schaltventil 110 aus Fig. 1 als ein steuerbares 3/2-Wege Magnetventil 110.1 ausgebildet ist. Weiter sind in Fig. 3A gezeigt, ein erstes Rückschlagventil 150 und ein zweites Rückschlagventil 160. Vorliegend ist das Trenn- und Verdrängungsmittel 125 zudem als ein Kolben 125A ausgebildet sowie das Rückstellmittel 126 als eine Druck- und/oder Zugfeder DZF. Da das Rückstellmittel 126 vorliegend in der zweiten Mediumskammer 140 angeordnet ist, ist die Druck- und/oder Zugfeder DZF hier konkret als Druckfeder ausgebildet. Alle weiteren Bezugszeichen in Fig. 3A haben eine zu Fig. 1 analoge Bedeutung.

Das erste Rückschlagventil 150 ist dabei dem ersten Düsenanschluss 123 der zweiten Mediumskammer 140 zugeordnet, wobei das zweite Rückschlagventil 160 wiederum dem Mediumsanschluss 122 der zweiten Mediumskammer 140 des Druckzylinders 120 zugeordnet ist.

Dabei ist das erste Rückschlagventil 150 dazu ausgebildet, im zweiten Schaltzustand S2 des Magnetventils 110.1, ein Ansaugen eines Mediums, insbesondere Luft, über den ersten Düsenanschluss 123 der zweiten Mediumskammer 140 des Druckzylinders 120 zu verhindern. Somit saugt die zweite Mediumskammer 140 ausschließlich ein gasförmiges Medium M1 oder ein flüssiges Medium M2 über den Mediumsanschluss 122 an, um die zweite Mediumskammer 140 neu mit einem gasförmigen Medium M1 oder einem flüssigen Medium M2 zu befüllen.

Das zweite Rückschlagventil 160 ist wiederum dazu ausgebildet, im ersten Schaltzustand S1 des Magnetventils 110.1, ein Entweichen des in der zweiten Mediumskammer 140 gehaltenen gasförmigen Mediums M1 oder des flüssigen Mediums M2 über den Mediumsanschluss 122 zu verhindern. Somit beaufschlagt das gasförmige Medium M1 oder das flüssige Medium M2 der zweiten Mediumskammer 140 ausschließlich den ersten Düsenanschluss 123, um über diesen an eine Düse gefördert zu werden, zum Beaufschlagen einer Oberfläche O mit einem Mediumspuls MP des gasförmigen Mediums M1 oder des flüssigen Mediums M2 der zweiten Mediumskammer 140.

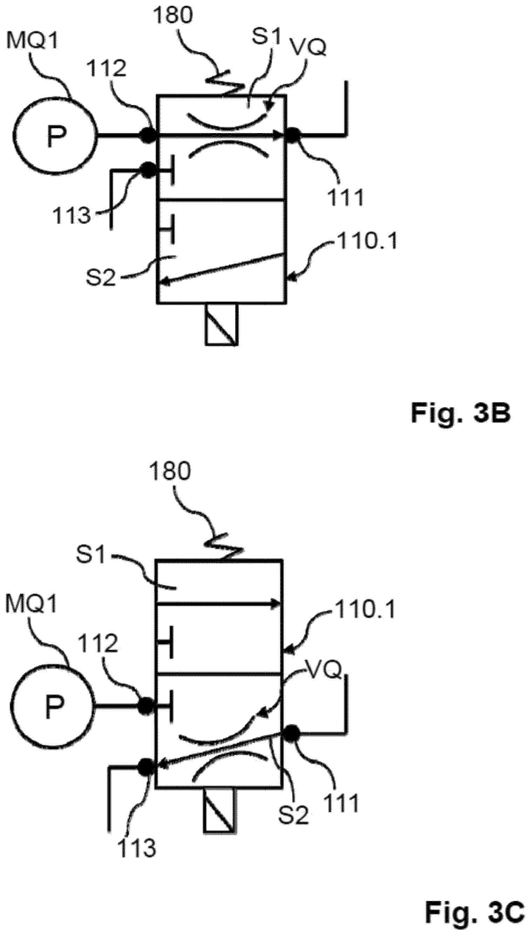

In Fig. 3B und Fig. 3C sind schematisch der erste Schaltzustand S1 und der zweite Schaltzustand S2 des 3/2-Wege Magnetventils 110.1 als eine bevorzugte Ausführungsform des Schaltventils 110 gezeigt, wobei das Magnetventil 110.1 einen Druckzylinderanschluss 111, einen ersten Mediumsquellenanschluss 112 und einen zweiten Düsenanschluss 113 aufweist.

In Fig. 3B ist der bestromte Schaltzustand, das heißt, der erste Schaltzustand S1 des Magnetventils 110.1 gezeigt. Hierbei bewirkt ein Elektromagnet eine Gegenkraft zu der durch die Feder 180 erzeugten Federkraft, um den ersten Mediumsanschluss 112 auf den Druckzylinderanschluss 111 durchzuschalten. Das heißt, ein Fließen des gasförmigen Mediums M1 vom ersten Mediumsanschluss 112 über den Druckzylinderanschluss 111, zur ersten Mediumskammer 130 des Druckzylinders 120 zu ermöglichen.

In Fig. 3C ist hingegen der unbestromte Schaltzustand, das heißt, der zweite Schaltzustand S2 des Magnetventils 110.1 gezeigt. Durch Unterbrechung des Stromflusses zum Elektromagneten des Magnetventils, erzeugt dieser keine Gegenkraft mehr zu der durch die Feder 180 erzeugten Federkraft. Somit schaltet das Magnetventil 110.1 den zweiten Düsenanschluss 113 durch auf den Druckzylinderanschluss 111. Das heißt, das druckbeaufschlage gasförmige Medium M1 entweicht aus der ersten Mediumskammer 130 über den zweiten Düsenanschluss 113 des Magnetventils 110.1.

Das Schaltventil 110 kann wie in Fig. 3 gezeigt als ein Magnetventil 110.1 ausgebildet sein und das Magnetventil 110.1 kann einen Ventilquerschnitt VQ1 aufweisen, der in Fig. 3B und Fig. 3C schematisch dargestellt ist.

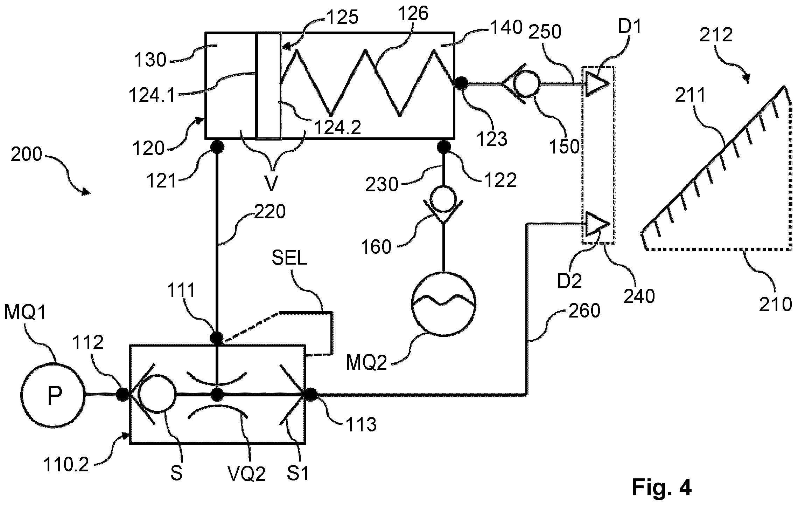

Das Schaltventil 110 kann auch in einer Variante wie in Fig. 4 gezeigt als ein Doppelrückschlagventil 110.2 ausgebildet sein, wobei das Doppelrückschlagventil 110.2 einen zweiten Ventilquerschnitt VQ2 aufweist.

Der erste und zweite Ventilquerschnitt VQ1, VQ2 ist vorbestimmt derart, dass mittels diesem eine Impulsstärke zum Bewirken eines impulsartigen Leerens der ersten und zweiten Mediumskammer 130, 140 festlegbar ist. Fig. 4 zeigt dazu konkret eine schematische Darstellung einer Ausführungsform eines Druckluftsystems 200 gemäß dem Konzept der Erfindung. Zusätzlich zu den zuvor beschriebenen Komponenten der Reinigungsvorrichtung 100 weist das vorliegende Druckluftsystem 200 weiter auf, eine erste Mediumsquelle MQ1, insbesondere eine Druckluftquelle, und eine zweite Mediumsquelle MQ2, insbesondere eine Wasserquelle. Das Schaltventil 110 aus Fig. 1 ist vorliegend ausgebildet als ein Doppelrückschlagventil 110.2, als alternative Ausführungsvariante zu dem zuvor beschriebenen Magnetventil 110.1, wobei das Doppelrückschlagventil 110.2 im Rahmen der vorliegenden Ausführungsform funktional identisch angelegt ist wie das Magnetventil 110.1. Zudem ist in Fig. 4 schematisch eine Anzahl an Düsen 240 gezeigt und die Oberfläche O bildet hier die transparente Abdeckung 211 eines Sensors 210, insbesondere eines Umgebungserfassungssensors 212.

In Fig. 4 ist zudem gezeigt, dass der Druckzylinderanschluss 111 des Doppelrückschlagventils 110.2 über eine erste Mediumszuleitung 220 mit dem Druckanschluss 121 des Druckzylinders 120 beziehungsweise der ersten Mediumskammer 130 verbunden ist. Zudem ist gezeigt, dass die zweite Mediumsquelle MQ2 über eine zweite Mediumszuleitung 230 mit dem Mediumsanschluss 122 des Druckzylinders 120 beziehungsweise der zweiten Mediumskammer 140 verbunden ist, wobei in der zweiten Mediumszuleitung 230 weiter das zweite Rückschlagventil 160 angeordnet ist. Weiter zeigt Fig. 4, dass der erste Düsenanschluss 123 des Druckzylinders 120 beziehungsweise der zweiten Mediumskammer 140 über eine erste Düsenzuleitung 250 mit einer Anzahl an Düsen 240 verbunden ist, wobei in der ersten Düsenzuleitung 250 weiter das erste Rückschlagventil 150 angeordnet ist. Es ist zudem gezeigt, dass der zweite Düsenanschluss 113 des Doppelrückschlagventils 110.2 über eine zweite Düsenzuleitung 260 mit der Anzahl an Düsen 240 verbunden ist.

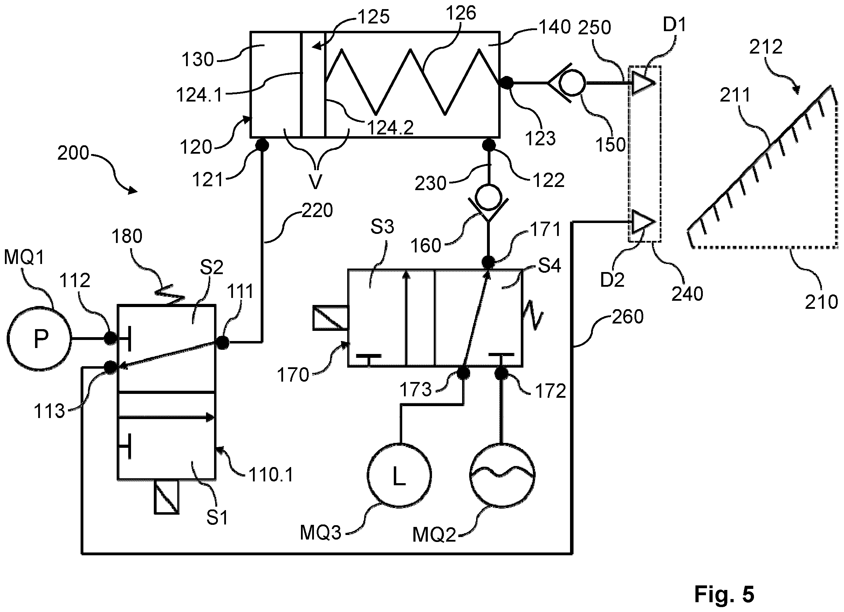

Fig. 5 zeigt eine schematische Darstellung einer weiteren bevorzugten Ausführungsform eines Druckluftsystems 200 gemäß dem Konzept der Erfindung. Im Unterschied zur vorstehenden Fig. 4, ist vorliegend das Schaltventil 110 aus Fig. 1 wieder als ein 3/2-Wege Magnetventil 110.1 ausgebildet gezeigt.

Zudem weist die vorliegende Ausführungsform eines Druckluftsystems 200 ein zweites Schaltventil 170 auf. Dieses ist in Fig. 5 wiederum als ein 3/2-Wege Magnetventil ausgebildet gezeigt. Das zweite Schaltventil 170 weist weiter auf, einen zweiten Druckzylinderanschluss 171, einen zweiten Mediumsquellenanschluss 172, an den eine zweite Mediumsquelle MQ2 anschließbar ist, und einen dritten Mediumsquellenanschluss 173, an den eine dritte Mediumsquelle MQ3, insbesondere die Umgebungsluft, anschließbar ist. Der zweite Druckzylinderanschluss 171 ist wiederum über die zweite Mediumszuleitung 230 mit dem Mediumsanschluss 122 der zweiten Mediumskammer 140 des Druckzylinders 120 verbunden.

In einem ersten Schaltzustand S3 des zweiten Schaltventils 170, wird der zweite Mediumsquellenanschluss 172 auf den zweiten Druckzylinderanschluss 171 durchgeschaltet. Die zweite Mediumsquelle MQ2 stellt weiter das flüssige Medium M2, insbesondere Wasser, am zweiten Mediumsquellenanschluss 172 bereit. Folglich saugt die zweite Mediumskammer 140 des Druckzylinders 120 im ersten Schaltzustand S3 des zweiten Schaltventils 170 über den Mediumsanschluss 122 insbesondere das flüssige Medium M2 an.

In dem in Fig. 5 ersichtlichen zweiten Schaltzustand S4 des zweiten Schaltventils 170, wird wiederum der dritte Mediumsquellenanschluss 173 auf den zweiten Druckzylinderanschluss 171 durchgeschaltet. Die dritte Mediumsquelle MQ3 stellt weiter das gasförmige Medium M1, insbesondere Umgebungsluft, am dritten Mediumsquellenanschluss 173 bereit. Folglich saugt die zweite Mediumskammer 140 des Druckzylinders 120 im zweiten Schaltzustand S4 des zweiten Schaltventils 170 über den Mediumsanschluss 122 insbesondere das gasförmige Medium M1 der dritten Mediumsquelle MQ3, das heißt, Umgebungsluft, an. Insgesamt ist hier bei der Ausführungsform in Fig. 5 vorgesehen, dass die zweite Mediumskammer 140 über den Mediumsanschluss 122, im ersten Schaltzustand S3 des zweiten Schaltventils 170, mit dem zweiten Mediumsquellenanschluss 172 und, im zweiten Schaltzustand S4 des zweiten Schaltventils 170, mit dem dritten Mediumsquellenanschluss 173 verbindbar ist.

Im Ergebnis steuert das zweite Schaltventil 170 das Befüllen der zweiten Mediumskammer 140 des Druckzylinders 120 mit wahlweise einem gasförmigen Medium M1 oder mit einem flüssigen Medium M2. Alternativ wäre als dritte Mediumsquelle MQ3 aber auch eine Quelle für ein Mehrphasengemisch, beispielsweise Wasserdampf, denkbar.

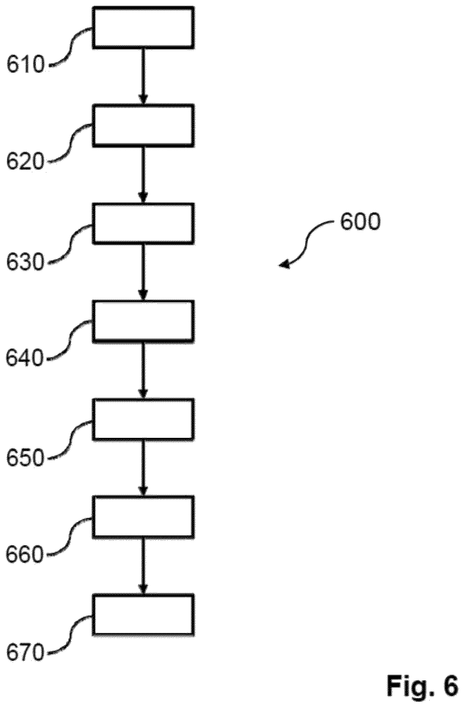

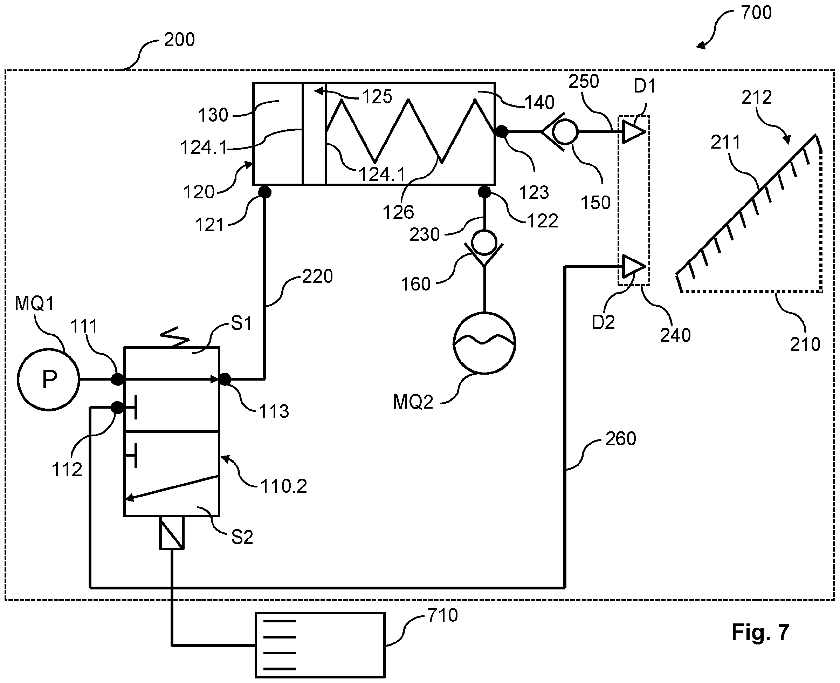

Fig. 6 zeigt eine schematische Darstellung eines Ablaufs eines Reinigungsvorganges 600 gemäß dem Konzept der Erfindung. Der Reinigungsvorgang zum Beaufschlagen einer Oberfläche O mit einem Mediumspuls MP durchläuft dabei die nachfolgenden Schritte. Im ersten Schaltzustand S1 des Schaltventils 110, erfolgt zuerst ein impulsartiges Aufladen 610 der ersten Mediumskammer 130 des Druckzylinders 120 mit dem gasförmigen Medium M1, insbesondere mit Druckluft. Dies erzeugt ein impulsartiges Verdrängen 620 des gasförmigen Mediums M1, insbesondere der Druckluft, oder des flüssigen Mediums M2, insbesondere des Wassers, aus der zweiten Mediumskammer 140 des Druckzylinders 120. Anschließend folgt ein impulsartiges Beaufschlagen 630 der Oberfläche O mit dem gasförmigen Medium M1, insbesondere der Druckluft, oder mit dem flüssigen Medium M2, insbesondere dem Wasser, aus der zweiten Mediumskammer 140 des Druckzylinders 120. Anschließend, im zweiten Schaltzustand S2 des Schaltventils 110, findet ein impulsartiges Ablassen 640 des gasförmigen Mediums M1, insbesondere der Druckluft, aus der ersten Mediumskammer 130 des Druckzylinders 120 statt. Dies resultiert in ein impulsartiges Beaufschlagen 650 der Oberfläche O mit dem gasförmigen Medium M1, insbesondere der Druckluft, aus der ersten Mediumskammer 130 des Druckzylinders 120. Dem schließt sich an das Rückführen 660 der Druckgeberfläche 124 des Trenn- und Verdrängungsmittels 125, insbesondere des Kolbens 125A oder dergleichen in die Ausgangslage A₀, vorzugsweise mittels der Rückstellkraft F_{R}. Schließlich folgt ein automatisches Auffüllen 670 der zweiten Mediumskammer 140 des Druckzylinders 120 mit dem gasförmigen Medium M1, insbesondere der Druckluft, oder dem flüssigen Medium M2, insbesondere dem Wasser. Dies geschieht durch Erzeugen eines Unterdrucks in der zweiten Mediumskammer 140 des Druckzylinders 120 mittels des Rückführens der zweiten Druckgeberfläche 124.2 des Trenn- und Verdrängungsmittels 125 in die Ausgangslage A₀. Fig. 7 zeigt eine schematische Darstellung eines Steuersystems 700 gemäß dem Konzept der Erfindung, wobei das Steuersystems 700 für ein Druckluftsystem 200 gemäß dem Konzept der Erfindung mittels der Steuer- und/oder Regeleinrichtung 710, die Schritte des Reinigungsvorganges 600 gemäß dem Konzept der Erfindung zum Beaufschlagen einer Oberfläche O mit einem Mediumspuls MP durchführt. Dies betrifft insbesondere ein Umschalten des Schaltventils 110, das einen ersten Druckzylinderanschluss 111, einen ersten Mediumsquellenanschluss 112 und einen zweiten Düsenanschluss 113 aufweist und ausgebildet ist zum Schalten in einen ersten Schaltzustand S1 und einen zweiten Schaltzustand S2. Dies betrifft auch ein Umschalten des Schaltventils 170 mit einem zweiten Druckzylinderanschluss 171, einem zweiten Mediumsquellenanschluss 172 und einem dritten Mediumsquellenanschluss 173, zum Schalten eines ersten Schaltzustandes S3 und eines zweiten Schaltzustandes S4.

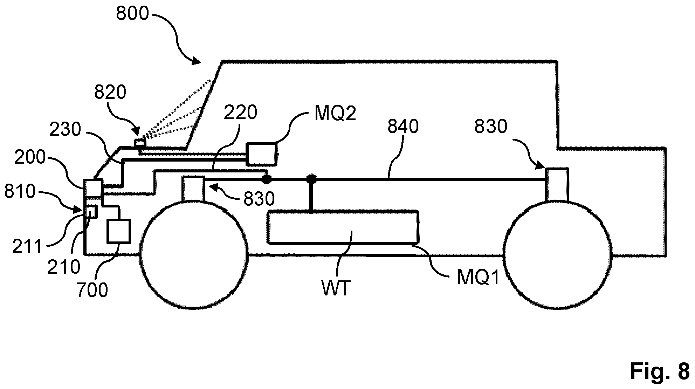

Fig. 8 zeigt eine schematische Darstellung eines Fahrzeugs 800 - vorliegend in Form eines PKW - aufweisend ein Druckluftsystem 200 mit einem Umgebungserfassungssensor 210 eines Sensorsystems 810, wobei der Umgebungserfassungssensor 210 eine transparente Abdeckung 211 aufweist, und weiter aufweisend ein Steuersystem 700. Vorliegend wird die erste Mediumsquelle MQ1 durch eine Druckluftversorgungsanlage 840 gebildet, welche weiterhin zur Versorgung einer Pneumatikanlage 830 in Form einer Luftfederanlage vorgesehen ist. Selbstverständlich ist es auch möglich, dass die erste Mediumsquelle MQ1 von einem separaten Verdichter oder dergleichen Druckluftquelle gebildet wird. Die erste Mediumsquelle MQ1 ist zwecks Zuführung des gasförmigen Mediums M1 über eine erste Mediumszuleitung 220 mit dem Druckluftsystem 200 verbunden. Die zweite Mediumsquelle MQ2 weist vorliegend einen Wassertank WT auf, welcher ebenfalls zur Versorgung einer Reinigungsanlage in Form einer Scheibenreinigungsanlage 820 mit Reinigungsflüssigkeit, insbesondere Wasser, eingesetzt wird. Dieser Tank ist über eine zweite Mediumszuleitung 230 mit dem Druckluftsystem 200 verbunden. Auf diese Weise kann über eine - hier aus Gründen der Übersichtlichkeit nicht dargestellte - Pumpe das flüssige Medium M2 dem Druckluftsystem 200 bereitgestellt werden. Selbstverständlich ist es bei der zweiten Mediumsquelle MQ2 ebenso möglich, dass diese durch eine eigene separate, insbesondere von anderen Systemen unabhängige, Mediumsquelle gebildet wird.

### Bezugszeichenliste

- 100: Reinigungsvorrichtung
- 110: Schaltventil
- 110.1: Magnetventil
- 110.2: Doppelrückschlagventil
- 111: Druckzylinderanschluss
- 112: erster Mediumsquellenanschluss
- 113: zweiter Düsenanschluss
- 120: Druckzylinder
- 121: Schaltventilanschluss
- 122: Mediumsanschluss
- 123: erster Düsenanschluss
- 124.1, 124.2: erste, zweite Druckgeberfläche
- 125: Trenn- und Verdrängungsmittel
- 125A: Kolben
- 125B: Membran
- 125C: gefalteter Balg
- 126: Rückstellmittel
- 130: erste Mediumskammer
- 140: zweite Mediumskammer
- 150: erstes Rückschlagventil
- 160: zweites Rückschlagventil
- 170: zweites Schaltventil
- 171: zweiter Druckzylinderanschluss
- 172: zweiter Mediumsquellenanschluss
- 173: dritter Mediumsquellenanschluss
- 180: Feder
- 200: Druckluftsystem
- 210: Sensor
- 211: transparente Abdeckung
- 212: Umgebungserfassungssensor
- 220: erste Mediumszuleitung
- 230: zweite Mediumszuleitung
- 240: Düse
- 250: erste Düsenzuleitung
- 260: zweite Düsenzuleitung
- 600: Reinigungsverfahren
- 610,620,630, 640, 650, 660, 670: Verfahrensschritte
- 700: Steuersystem
- 710: Steuer- und/oder Regeleinrichtung
- 800: Fahrzeug
- 810: Sensorsystem
- 820: Scheibenreinigungsanlage
- 830: Pneumatikanlage
- 840: Druckluftversorgungsanlage
- A₀: Ausgangsposition
- D₁: erste Düse
- D₂: zweite Düse
- DZF: Druck- oder Zugfeder
- F_{R}: Rückstellkraft
- K: Kompressor
- M1: gasförmiges Medium
- M2: flüssiges Medium
- MP: Mediumspuls
- MPₙ: Sequenz von Mediumspulsen
- MQ1: erste Mediumsquelle
- MQ2: zweite Mediumsquelle
- MQ3: dritte Mediumsquelle
- O: Oberfläche
- S1: erster Schaltzustand
- S2: zweiter Schaltzustand
- SEL: Schnellentlüftungsleitung
- UL: Umgebungsluft
- V: Volumen Druckzylinder
- VMK1: Volumen erste Mediumskammer
- VMK2: Volumen zweite Mediumskammer
- VQ: Ventilquerschnitt
- VS: Volumenstrom
- WT: Wassertank

## Patentansprüche

1. Reinigungsvorrichtung (100) zum Beaufschlagen einer Oberfläche (O) mit einem Mediumspuls (MP), insbesondere einer Oberfläche (O) eines Sensors (210), vorzugsweise eines optischen Sensors, insbesondere eines Umgebungserfassungssensors (212), aufweisend:
- einen Druckzylinder (120), mit einem Druckanschluss (121), einem Mediumsanschluss (122) und einem ersten Düsenanschluss (123), wobei
- im Druckzylinder (120) ein Trenn- und Verdrängungsmittel (125, 125A, 125B) mit einer ersten und/oder zweiten Druckgeberfläche (124) angeordnet ist, zum Unterteilen des Volumens (V) des Druckzylinders (120) in eine erste Mediumskammer (130) und eine zweite Mediumskammer (140) und zum Verändern eines Volumens (VMK1, VMK2) der ersten und zweiten Mediumskammer (130,140),
**gekennzeichnet durch**:
- ein Schaltventil (110), das einen ersten Druckzylinderanschluss (111), einen ersten Mediumsquellenanschluss (112) und einen zweiten Düsenanschluss (113) aufweist und ausgebildet ist zum Schalten in einen ersten Schaltzustand (S1) und einen zweiten Schaltzustand (S2), wobei
- im ersten Schaltzustand (S1) die erste Mediumskammer (130) über den Druckanschluss (121) mit dem ersten Mediumsquellenanschluss (112) verbindbar ist, zum Verringern des Volumens (VMK2) der zweiten Mediumskammer (140), und
- im zweiten Schaltzustand (S2) die erste Mediumskammer (130) über den Druckanschluss (121) mit dem zweiten Düsenanschluss (113) verbindbar ist, zum Vergrößern des Volumens (VMK2) der zweiten Mediumskammer (140),
- derart, dass die Oberfläche (O) beaufschlagbar ist mit
- einem Mediumspuls (MP) eines flüssigen Mediums (M2), und/oder
- einem Mediumspuls (MP) eines gasförmigen Mediums (M1).

2. Reinigungsvorrichtung (100) nach Anspruch 1, **dadurch gekennzeichnet, dass** das Trenn- und Verdrängungsmittel (125, 125A, 125B) in der ersten Mediumskammer (130) und/oder der zweiten Mediumskammer (140) des Druckzylinders (120) eine erste und/oder zweite Druckgeberfläche (124.1, 124.2) aufweist, wobei die erste und/oder zweite Druckgeberfläche (124.1, 124.2), unterschiedlich druckbeaufschlagbar ist, insbesondere zur Erzeugung eines Druckunterschieds zur Erzeugung des Mediumspulses.

3. Reinigungsvorrichtung (100) nach Anspruch 1 oder 2, **dadurch gekennzeichnet, dass** das Trenn- und Verdrängungsmittel (125, 125A, 125B) in der ersten Mediumskammer (130) und/oder der zweiten Mediumskammer (140) des Druckzylinders (120) ein Rückstellmittel (126) aufweist, wobei das Rückstellmittel (126) auf Seiten der ersten und/oder zweiten Mediumskammer (130, 140) unterschiedlich druckbeaufschlagbar ist, wobei über das Trenn- und Verdrängungsmittel (125, 125A, 125B) über das Rückstellmittel (126) mit einer Rückstellkraft (F_{R}) beaufschlagbar ist, insbesondere zusätzlich zur Erzeugung des Mediumspulses.

4. Reinigungsvorrichtung (100) nach einem der Ansprüche 1 bis 3, **dadurch gekennzeichnet, dass**
- mittels der ersten Mediumskammer (130) ein impulsartiges Leeren der zweiten Mediumskammer (140) zum ersten Düsenanschluss (123) bewirkbar ist, und/oder
- mittels der Rückstellkraft (F_{R}), insbesondere gegen einen Umgebungsdruck am zweiten Düsenanschluss (113), ein impulsartiges Leeren der ersten Mediumskammer (130) zum zweiten Düsenanschluss (113) bewirkbar ist, insbesondere wobei die Oberfläche (O) beaufschlagbar ist mit
- einem Mediumspuls (MP) des flüssigen Mediums (M2), nämlich in dem ersten Schaltzustand mit einem ersten Mediumspuls (MP1), vorzugsweise in Form eines Wasserpulses oder dergleichen Flüssigkeitspuls, und/oder
- einem Mediumspuls (MP) des gasförmigen Mediums (M1), nämlich in dem zweiten Schaltzustand mit einem zweiten Mediumspuls (MP2), vorzugsweise in Form eines Druckluftpulses.

5. Reinigungsvorrichtung (100) nach einem der Ansprüche 1 bis 4, **dadurch gekennzeichnet, dass** beim impulsartigen Leeren der ersten Mediumskammer (130), insbesondere zugleich, die zweite Mediumskammer (140) des Druckzylinders (120) über den Mediumsanschluss (122) mit dem flüssigen Medium (M2) und dem gasförmigen Medium (M1) befüllbar ist, insbesondere neu befüllbar ist.

6. Reinigungsvorrichtung (100) nach einem der Ansprüche 1 bis 5, **dadurch gekennzeichnet, dass**
- über das Volumen (V) des Druckzylinders (120) ein durch den Druckzylinder (120) generierbarer Volumenstrom (VS) des gasförmigen und/oder des flüssigen Mediums (M1/M2) festlegbar ist, wobei
- das Trenn- und Verdrängungsmittel (125) ausgebildet ist zum Bewirken eines impulsartigen Leerens der zweiten Mediumskammer (140) zum ersten Düsenanschluss (123).

7. Reinigungsvorrichtung (100) nach einem der Ansprüche 1 bis 6, **dadurch gekennzeichnet, dass**
- eine Impulsstärke des impulsartigen Leerens der zweiten Mediumskammer (140) über den ersten Düsenanschluss (123) über einen in der ersten Mediumskammer (130) herrschenden Druck des gasförmigen Mediums (M1) steuerbar ist.

8. Reinigungsvorrichtung (100) nach einem der Ansprüche 1 bis 7, **dadurch gekennzeichnet, dass** das Trenn- und Verdrängungsmittels (125) als ein Kolben (125A), eine Membran (125B) oder ein gefalteter Balg (125C) ausgebildet ist.

9. Reinigungsvorrichtung (100) nach einem der Ansprüche 1 bis 8, **dadurch gekennzeichnet, dass**
- das Schaltventil (110) als ein Magnetventil (110.1) ausgebildet ist und das Magnetventil (110.1) einen ersten Ventilquerschnitt (VQ1) aufweist, oder
- das Schaltventil (110) als ein Doppelrückschlagventil (110.2) ausgebildet ist, wobei das Doppelrückschlagventil (110.2) einen zweiten Ventilquerschnitt (VQ2) aufweist,
wobei vorzugsweise der erste und/oder zweite Ventilquerschnitt (VQ1, VQ2) vorbestimmt ist derart, dass mittels diesem eine Impulsstärke zum Bewirken eines impulsartigen Leerens der ersten und/oder zweiten Mediumskammer (140) festlegbar ist.

10. Reinigungsvorrichtung (100) nach einem der Ansprüche 1 bis 9, **dadurch gekennzeichnet, dass**
- das flüssige Medium (M2) mit einem Zusatzmittel, insbesondere einer Reinigungs- und/oder Frostschutzflüssigkeit, versetzbar ist, und/oder
- das flüssige Medium (M2) und/oder Komponenten der Reinigungsvorrichtung beheizbar ist.

11. Reinigungsvorrichtung (100) nach einem der der Ansprüche 1 bis 10, **dadurch gekennzeichnet, dass** die Reinigungsvorrichtung (100) weiter aufweist:
- ein zweites Schaltventil (170), mit einem zweiten Druckzylinderanschluss (171), einem zweiten Mediumsquellenanschluss (172) und einem dritten Mediumsquellenanschluss (173), zum Schalten eines ersten Schaltzustandes (S3) und eines zweiten Schaltzustandes (S4), wobei
- die zweite Mediumskammer (140) über den Mediumsanschluss (122), im ersten Schaltzustand (S3) des zweiten Schaltventils (170), mit dem zweiten Mediumsquellenanschluss (172) und, im zweiten Schaltzustand (S4) des zweiten Schaltventils (170), mit dem dritten Mediumsquellenanschluss (173) verbindbar ist.

12. Druckluftsystem (200) aufweisend mindestens eine Reinigungsvorrichtung (100) nach einem der Ansprüche 1 bis 11 und mindestens einen Sensor (210) eines Sensorsystems (810), wobei der Sensor, insbesondere eine transparente Abdeckung (211) des Sensors (210), eine Oberfläche (O) aufweist, und wobei
- eine erste Mediumsquelle (MQ1) des Druckluftsystems (200) über eine erste Mediumszuleitung (220) mit dem ersten Mediumsquellenanschluss (112) der mindestens einen Reinigungsvorrichtung (100) verbindbar ist, und
- eine zweite Mediumsquelle (MQ2) über eine zweite Mediumszuleitung (230) mit dem Mediumsanschluss (122) der mindestens einen Reinigungsvorrichtung (100) verbindbar ist, und
- mindestens eine Düse (240) über eine erste Düsenzuleitung (250) mit dem ersten Düsenanschluss (123) und über eine zweite Düsenzuleitung (260) mit dem zweiten Düsenanschluss (113) der mindestens einen Reinigungsvorrichtung (100) verbindbar ist.

13. Druckluftsystem (200) nach Anspruch 12, **dadurch gekennzeichnet, dass**
- ein erstes Rückschlagventil (150) in der ersten Düsenzuleitung (250) und/oder
- ein zweites Rückschlagventil (160) in der zweiten Mediumszuleitung (230) angeordnet ist.

14. Druckluftsystem (200) nach Anspruch 12 oder 13, **dadurch gekennzeichnet, dass**
- die mindestens eine Düse (240) mit einer Auslassöffnung für das gasförmige und das flüssige Medium (M1/M2) ausgebildet ist und/oder
- die mindestens eine Düse (240) mit separaten Auslassöffnungen für das gasförmige Medium (M1) und das flüssige Medium (M2) ausgebildet ist.

15. Druckluftsystem (200) nach einem der Ansprüche 12 bis 14, **dadurch gekennzeichnet, dass**
das Druckluftsystem (200) zwei Düsen (240), nämlich eine erste und zweite Düse (D1, D2) aufweist, wobei
- die erste Düse (D1) über die erste Düsenzuleitung (250) mit dem ersten Düsenanschluss (123) und die zweite Düse (D2) über die zweite Düsenzuleitung (260) mit dem zweiten Düsenanschluss (113) der mindestens einen Reinigungsvorrichtung (100) verbindbar ist, und
- in der ersten Düse (D1) das gasförmige Medium (M1) und in der zweiten Düse (D2) das flüssige Medium (M2) förderbar ist.

16. Druckluftsystem (200) nach einem der Ansprüche 12 bis 15, **dadurch gekennzeichnet, dass** die erste Mediumsquelle (MQ1) eine Druckluftquelle, insbesondere ein Kompressor (K), ist und die zweite Mediumsquelle (MQ2) ein Fluidtank, insbesondere ein Wassertank (WT), ist, insbesondere
- die erste Mediumsquelle (MQ1) einem anderen Primärzweck dient, insbesondere der Versorgung einer Luftfederanlage oder dergleichen Pneumatikanlage (530) und/oder
- die zweite Mediumsquelle (MQ2) einem anderen Primärzweck dient, insbesondere der Versorgung einer Scheibenreinigungsanlage (520) oder dergleichen Reinigungsanlage.

17. Druckluftsystem (200) nach einem der Ansprüche 12 bis 16, **dadurch gekennzeichnet, dass**
- zusätzlich zu der zweiten Mediumsquelle (MQ2) eine dritte Mediumsquelle (MQ3) über die zweite Mediumszuleitung (230) mit dem Mediumsanschluss (122) der mindestens einen Reinigungsvorrichtung (100) verbindbar ist, wobei
- die dritte Mediumsquelle (MQ3) die Umgebungsluft (UL) ist.

18. Reinigungsverfahren (600), unter Verwendung wenigstens einer Reinigungsvorrichtung (100) nach einem der Ansprüche 1 bis 11 und/oder einem Druckluftsystem (200) nach einem der Ansprüche 12 bis 17 zum Beaufschlagen einer Oberfläche (O) mit einem Mediumspuls (MP), wobei
- das Schaltventil (110), das einen ersten Druckzylinderanschluss (111), einen ersten Mediumsquellenanschluss (112) und einen zweiten Düsenanschluss (113) aufweist, in einen ersten Schaltzustand (S1) und einen zweiten Schaltzustand (S2) geschaltet wird, wobei
- im ersten Schaltzustand (S1) die erste Mediumskammer (130) über den Druckanschluss (121) mit dem ersten Mediumsquellenanschluss (112) verbunden wird, zum Verringern des Volumens (VMK2) der zweiten Mediumskammer (140), und
- im zweiten Schaltzustand (S2) die erste Mediumskammer (130) über den Druckanschluss (121) mit dem zweiten Düsenanschluss (113) verbunden wird, zum Vergrößern des Volumens (VMK2) der zweiten Mediumskammer (140),
- derart, dass die Oberfläche (O) beaufschlagt wird mit
- einem Mediumspuls (MP) eines flüssigen Mediums (M2), und/oder
- einem Mediumspuls (MP) eines gasförmigen Mediums (M1).

19. Reinigungsverfahren (600) nach Anspruch 18, **dadurch gekennzeichnet, dass**
- im ersten Schaltzustand (S1) des Schaltventils (110), ein impulsartiges Aufladen (610) der ersten Mediumskammer (130) des Druckzylinders (120) mit dem gasförmigen Medium (M1), insbesondere Druckluft erfolgt,
- ein impulsartiges Verdrängen (620) des gasförmigen Mediums (M1), insbesondere Druckluft, oder des flüssigen Mediums (M2), insbesondere Wasser, aus der zweiten Mediumskammer (140) des Druckzylinders (120); und
- ein impulsartiges Beaufschlagen (630) der Oberfläche (O) mit dem gasförmigen Medium (M1), insbesondere Druckluft, oder mit dem flüssigen Medium (M2), insbesondere Wasser, aus der zweiten Mediumskammer (140) des Druckzylinders (120) erfolgt,
und/oder
- im zweiten Schaltzustand (S2) des Schaltventils (110) ein impulsartiges Ablassen (640) des gasförmigen Mediums (M1), insbesondere Druckluft, aus der ersten Mediumskammer (130) des Druckzylinders (120) erfolgt; und
- ein impulsartiges Beaufschlagen (650) der Oberfläche (O) mit dem gasförmigen Medium (M1), insbesondere Druckluft, aus der ersten Mediumskammer (130) des Druckzylinders (120).

20. Reinigungsverfahren (600) nach Anspruch 18 oder 19, **gekennzeichnet durch**
- Rückführen (660) der ersten und/oder zweiten Druckgeberfläche (124.1, 124.2) des Trenn- und Verdrängungsmittels (125), insbesondere des Kolbens (125A) oder dergleichen in die Ausgangslage (A₀), vorzugsweise mittels der Rückstellkraft (F_{R}); und
- automatischem Auffüllen (670) der zweiten Mediumskammer (140) des Druckzylinders (120) mit dem gasförmigen Medium (M1), insbesondere Druckluft, oder dem flüssigen Medium (M2), insbesondere Wasser, durch Erzeugen eines Unterdrucks in der zweiten Mediumskammer (140) des Druckzylinders (120) mittels des Rückführens der ersten und/oder zweiten Druckgeberfläche (124.1, 124.2) des Trenn- und Verdrängungsmittels (125) in die Ausgangslage (A₀).

21. Reinigungsverfahren nach einem der Ansprüche 18 bis 20, **dadurch gekennzeichnet, dass** das Beaufschlagen einer Oberfläche (O) mit einem Mediumspuls (MP) erfolgt und der Mediumspuls (MP) Teil einer Sequenz von Mediumspulsen (MPₙ) ist, insbesondere wobei eine Zusammensetzung und/oder Abfolge der Sequenz von Mediumspulsen (MPₙ) steuerbar ist, vorzugsweise zeitlich, selektiv und/oder intermittierend steuerbar ist.

22. Reinigungsverfahren (600) nach Anspruch 18 bis 21, **dadurch gekennzeichnet, dass** der Druckzylinder (120) ausgebildet ist, in der ersten Mediumskammer (130) das gasförmige Medium (M1) und in der zweiten Mediumskammer (140) das flüssige Medium (M2) und das gasförmige Medium (M1) zu halten.

23. Fahrzeug (800) mit wenigstens einer Reinigungsvorrichtung (100) nach einem der Ansprüche 1 bis 11 und/oder einem Druckluftsystem (200) nach einem der Ansprüche 12 bis 17 und/oder einem Steuersystem (700) mit einer Steuer- und/oder Regeleinrichtung (710), wobei die Steuer- und/oder Regeleinrichtung (710) ausgebildet ist, die Schritte des Reinigungsverfahrens (600) nach einem der Ansprüche 18 bis 22 auszuführen.

24. Fahrzeug (800) nach Anspruch 23, **dadurch gekennzeichnet, dass** eine Pneumatikanlage (830) zur Versorgung der ersten Mediumsquelle (MQ1) mit dem gasförmigen Medium (M1) an das Druckluftsystem (200) angeschlossen ist und, eine Scheibenreinigungsanlage (820) zur Versorgung der zweiten Mediumsquelle (MQ2) mit dem flüssigen Medium (M2) an das Druckluftsystem (200) angeschlossen ist.

## Claims

1. Cleaning device (100) for applying a medium pulse (MP) to a surface (O), in particular a surface (O) of a sensor (210), preferably an optical sensor, in particular an environment detection sensor (212), comprising:
- a pressure cylinder (120), which has a pressure connection (121), a medium connection (122), and a first nozzle connection (123),
- a separating and displacement means (125, 125A, 125B), which has a first and/or second pressure transmitter surface (124), being arranged in the pressure cylinder (120) in order to divide the volume (V) of the pressure cylinder (120) into a first medium chamber (130) and a second medium chamber (140) and in order to change a volume (VMK1, VMK2) of the first and second medium chambers (130, 140),
**characterized by**
- a switching valve (110), which has a first pressure cylinder connection (111), a first medium source connection (112), and a second nozzle connection (113) and is designed to switch into a first switching state (S1) and a second switching state (S2),
- in the first switching state (S1), it being possible for the first medium chamber (130) to be connected to the first medium source connection (112) via the pressure connection (121) in order to reduce the volume (VMK2) of the second medium chamber (140), and
- in the second switching state (S2), it being possible for the first medium chamber (130) to be connected to the second nozzle connection (113) via the pressure connection (121) in order to increase the volume (VMK2) of the second medium chamber (140),
- in such a way that
- a medium pulse (MP) of a liquid medium (M2), and/or
- a medium pulse (MP) of a gaseous medium (M1)
can be applied to the surface (O).

2. Cleaning device (100) according to claim 1, **characterized in that** the separating and displacement means (125, 125A, 125B) in the first medium chamber (130) and/or the second medium chamber (140) of the pressure cylinder (120) has a first and/or second pressure transmitter surface (124.1, 124.2), it being possible for different pressures to be applied to the first and/or second pressure transmitter surface (124.1, 124.2), in particular in order to generate a pressure difference for generating the medium pulse.

3. Cleaning device (100) according to claim 1 or 2, **characterized in that** the separating and displacement means (125, 125A, 125B) in the first medium chamber (130) and/or the second medium chamber (140) of the pressure cylinder (120) comprises a restoring means (126), it being possible to apply different pressures to the restoring means (126) on the sides of the first and/or second medium chamber (130, 140), it being possible for a restoring force (F_{R}) to be applied via the separating and displacement means (125, 125A, 125B) via the restoring means (126), in particular in addition to the generation of the medium pulse.

4. Cleaning device (100) according to any of claims 1 to 3,
**characterized in that**
- pulse-like emptying of the second medium chamber (140) to the first nozzle connection (123) can be brought about by means of the first medium chamber (130), and/or
- pulse-like emptying of the first medium chamber (130) to the second nozzle connection (113) can be brought about by means of the restoring force (F_{R}), in particular counter to an ambient pressure at the second nozzle connection (113), in particular it being possible for
- a medium pulse (MP) of the liquid medium (M2), namely in the first switching state by means of a first medium pulse (MP1), preferably in the form of a water pulse or similar liquid pulse, and/or
- a medium pulse (MP) of the gaseous medium (M1), namely in the second switching state by means of a second medium pulse (MP2), preferably in the form of a compressed air pulse,
to be applied to the surface (O).

5. Cleaning device (100) according to any of claims 1 to 4,
**characterized in that** during the pulse-like emptying of the first medium chamber (130), in particular at the same time, the second medium chamber (140) of the pressure cylinder (120) can be filled, in particular can be refilled, with the liquid medium (M2) and the gaseous medium (M1) via the medium connection (122).

6. Cleaning device (100) according to any of claims 1 to 5,
**characterized in that**
- a volumetric flow (VS) of the gaseous and/or liquid medium (M1/M2), which can be generated by the pressure cylinder (120), can be set via the volume (V) of the pressure cylinder (120),
- the separating and displacement means (125) being designed to bring about pulse-like emptying of the second medium chamber (140) to the first nozzle connection (123).

7. Cleaning device (100) according to any of claims 1 to 6,
**characterized in that**
- a pulse strength of the pulse-like emptying of the second medium chamber (140) via the first nozzle connection (123) can be controlled via a pressure of the gaseous medium (M1) prevailing in the first medium chamber (130).

8. Cleaning device (100) according to any of claims 1 to 7,
**characterized in that** the separating and displacement means (125) is formed as a piston (125A), a membrane (125B) or a folded bellows (125C).

9. Cleaning device (100) according to any of claims 1 to 8,
**characterized in that**
- the switching valve (110) is in the form of a solenoid valve (110.1) and the solenoid valve (110.1) has a first valve cross section (VQ1), or
- the switching valve (110) is in the form of a double check valve (110.2), the double check valve (110.2) having a second valve cross section (VQ2),
the first and/or second valve cross section (VQ1, VQ2) preferably being predetermined in such a way that a pulse strength for bringing about pulse-like emptying of the first and/or second medium chamber (140) can be set thereby.

10. Cleaning device (100) according to any of claims 1 to 9,
**characterized in that**
- the liquid medium (M2) can be mixed with an additive, in particular a cleaning and/or antifreeze liquid, and/or
- the liquid medium (M2) and/or components of the cleaning device can be heated.

11. Cleaning device (100) according to any of claims 1 to 10,
**characterized in that** the cleaning device (100) further comprises:
- a second switching valve (170), which has a second pressure cylinder connection (171), a second medium source connection (172), and a third medium source connection (173), for switching a first switching state (S3) and a second switching state (S4),
- it being possible for the second medium chamber (140) to be connected, in the first switching state (S3) of the second switching valve (170), via the medium connection (122) to the second medium source connection (172) and to be connected, in the second switching state (S4) of the second switching valve (170), to the third medium source connection (173).

12. Compressed air system (200) comprising at least one cleaning device (100) according to any of claims 1 to 11 and at least one sensor (210) of a sensor system (810), wherein the sensor, in particular a transparent cover (211) of the sensor (210), has a surface (O), and wherein
- a first medium source (MQ1) of the compressed air system (200) can be connected via a first medium supply line (220) to the first medium source connection (112) of the at least one cleaning device (100), and
- a second medium source (MQ2) can be connected via a second medium supply line (230) to the medium connection (122) of the at least one cleaning device (100), and
- at least one nozzle (240) can be connected via a first nozzle supply line (250) to the first nozzle connection (123) and via a second nozzle supply line (260) to the second nozzle connection (113) of the at least one cleaning device (100).

13. Compressed air system (200) according to claim 12, **characterized in that**
- a first check valve (150) is arranged in the first nozzle supply line (250) and/or
- a second check valve (160) is arranged in the second medium supply line (230).

14. Compressed air system (200) according to either claim 12 or 13, **characterized in that**
- the at least one nozzle (240) is formed having an outlet opening for the gaseous and the liquid medium (M1/M2), and/or
- the at least one nozzle (240) is formed having separate outlet openings for the gaseous medium (M1) and the liquid medium (M2).

15. Compressed air system (200) according to any of claims 12 to 14,
**characterized in that**
the compressed air system (200) comprises two nozzles (240), namely a first and second nozzle (D1, D2),
- it being possible to connect the first nozzle (D1) via the first nozzle supply line (250) to the first nozzle connection (123) and the second nozzle (D2) via the second nozzle supply line (260) to the second nozzle connection (113) of the at least one cleaning device (100), and
- it being possible for the gaseous medium (M1) to be conveyed in the first nozzle (D1) and for the liquid medium (M2) to be conveyed in the second nozzle (D2).

16. Compressed air system (200) according to any of claims 12 to 15,
**characterized in that** the first medium source (MQ1) is a compressed air source, in particular a compressor (K), and the second medium source (MQ2) is a fluid tank, in particular a water tank (WT), in particular
- the first medium source (MQ1) is intended to provide a different primary purpose, in particular supplying an air suspension system or similar pneumatic system (530), and/or
- the second medium source (MQ2) is intended to provide a different primary purpose, in particular supplying a window cleaning system (520) or similar cleaning system.

17. Compressed air system (200) according to any of claims 12 to 16,
**characterized in that**
- in addition to the second medium source (MQ2), a third medium source (MQ3) can be connected via the second medium supply line (230) to the medium connection (122) of the at least one cleaning device (100),
- the third medium source (MQ3) being ambient air (UL).

18. Cleaning method (600) using at least one cleaning device (100) according to any of claims 1 to 11 and/or a compressed air system (200) according to any of claims 12 to 17 for applying a medium pulse (MP) to a surface (O), wherein
- the switching valve (110), which has a first pressure cylinder connection (111), a first medium source connection (112), and a second nozzle connection (113), is switched into a first switching state (S1) and a second switching state (S2), wherein
- in the first switching state (S1), the first medium chamber (130) is connected via the pressure connection (121) to the first medium source connection (112) in order to reduce the volume (VMK2) of the second medium chamber (140), and
- in the second switching state (S2), the first medium chamber (130) is connected via the pressure connection (121) to the second nozzle connection (113) in order to increase the volume (VMK2) of the second medium chamber (140),
- in such a way that
- a medium pulse (MP) of a liquid medium (M2), and/or
- a medium pulse (MP) of a gaseous medium (M1) can be applied to the surface (O).

19. Cleaning method (600) according to claim 18, **characterized in that**
- in the first switching state (S1) of the switching valve (110), pulse-like charging (610) of the first medium chamber (130) of the pressure cylinder (120) takes place with the gaseous medium (M1), in particular compressed air,
- pulse-like displacement (620) of the gaseous medium (M1), in particular compressed air, or of the liquid medium (M2), in particular water, from the second medium chamber (140) of the pressure cylinder (120); and
- pulse-like application (630) of the gaseous medium (M1), in particular compressed air, or of the liquid medium (M2), in particular water, takes place to the surface (O) from the second medium chamber (140) of the pressure cylinder (120),
and/or
- in the second switching state (S2) of the switching valve (110), pulse-like drainage (640) of the gaseous medium (M1), in particular compressed air, takes place from the first medium chamber (130) of the pressure cylinder (120); and
- pulse-like application (650) of the gaseous Medium (M1), in particular compressed air, to the surface (O) from the first medium chamber (130) of the pressure cylinder (120).

20. Cleaning method (600) according to claim 18 or 19, **characterized by**
- returning (660) the first and/or second pressure transmitter surface (124.1, 124.2) of the separating and displacement means (125), in particular the piston (125A) or the like, into the starting position (A₀), preferably by means of the restoring force (F_{R}); and
- automatically filling (670) the second medium chamber (140) of the pressure cylinder (120) with the gaseous medium (M1), in particular compressed air, or with the liquid medium (M2), in particular water, by generating a vacuum in the second medium chamber (140) of the pressure cylinder (120) by means of returning the first and/or second pressure transmitter surface (124.1, 124.2) of the separating and displacement means (125) into the starting position (A₀).

21. Cleaning method according to any of claims 18 to 20,
**characterized in that** application of a medium pulse (MP) to a surface (O) takes place and the medium pulse (MP) is part of a sequence of medium pulses (MPₙ), in particular it being possible for a combination and/or order of the sequence of medium pulses (MPₙ) to be controlled, preferably over time, selectively and/or intermittently.

22. Cleaning method (600) according to claims 18 to 21,
**characterized in that** the pressure cylinder (120) is designed to hold the gaseous medium (M1) in the first medium chamber (130) and the liquid medium (M2) and the gaseous medium (M1) in the second medium chamber (140).

23. Vehicle (800) comprising at least one cleaning device (100) according to any of claims 1 to 11 and/or a compressed air system (200) according to any of claims 12 to 17 and/or a control system (700) comprising an open-loop and/or closed-loop control device (710), wherein the open-loop and/or closed-loop control device (710) is designed to carry out the steps of the cleaning method (600) according to any of claims 18 to 22.

24. Vehicle (800) according to claim 23, **characterized in that** a pneumatic system (830) for supplying the gaseous medium (M1) to the first medium source (MQ1) is connected to the compressed air system (200), and a window cleaning system (820) for supplying the liquid medium (M2) to the second medium source (MQ2) is connected to the compressed air system (200).

## Revendications

1. Dispositif de nettoyage (100) permettant de solliciter une surface (O) par une impulsion de milieu (MP), en particulier une surface (O) d'un capteur (210), de préférence d'un capteur optique, en particulier d'un capteur de détection d'environnement (212), présentant :
- un cylindre de pression (120), comportant un raccord de pression (121), un raccord de milieu (122) et un premier raccord de buse (123),
- un moyen de séparation et de refoulement (125, 125A, 125B) comportant une première et/ou une seconde surface de transmission de pression (124) étant disposé dans le cylindre de pression (120), afin de diviser le volume (V) du cylindre de pression (120) en une première chambre de milieu (130) et une seconde chambre de milieu (140) et de modifier un volume (VMK1, VMK2) de la première et de la seconde chambre de milieu (130,140),
**caractérisé par** :
- une soupape de commutation (110) qui présente un premier raccord de cylindre de pression (111), un premier raccord de source de milieu (112) et un second raccord de buse (113) et est réalisée pour commuter dans un premier état de commutation (S1) et un second état de commutation (S2),
- dans le premier état de commutation (S1), la première chambre de milieu (130) pouvant être reliée au premier raccord de source de milieu (112) par l'intermédiaire du raccord de pression (121), pour diminuer le volume (VMK2) de la seconde chambre de milieu (140), et
- dans le second état de commutation (S2), la première chambre de milieu (130) pouvant être reliée au second raccord de buse (113) par l'intermédiaire du raccord de pression (121), pour augmenter le volume (VMK2) de la seconde chambre de milieu (140),
- de telle sorte que la surface (O) peut être sollicitée par
- une impulsion de milieu (MP) d'un milieu liquide (M2), et/ou
- une impulsion de milieu (MP) d'un milieu gazeux (M1).

2. Dispositif de nettoyage (100) selon la revendication 1, **caractérisé en ce que** le moyen de séparation et de refoulement (125, 125A, 125B) présente une première et/ou une seconde surface de transmission de pression (124.1, 124.2) dans la première chambre de milieu (130) et/ou la seconde chambre de milieu (140) du cylindre de pression (120), la première et/ou la seconde surface de transmission de pression (124.1, 124.2), pouvant être sollicitées en pression différemment, en particulier pour la production d'une différence de pression pour la production de l'impulsion de milieu.

3. Dispositif de nettoyage (100) selon la revendication 1 ou 2,
**caractérisé en ce que** le moyen de séparation et de refoulement (125, 125A, 125B) présente un moyen de rappel (126) dans la première chambre de milieu (130) et/ou la seconde chambre de milieu (140) du cylindre de pression (120), le moyen de rappel (126) pouvant être sollicité en pression différemment sur des côtés de la première et/ou seconde chambre de milieu (130, 140), par l'intermédiaire du moyen de séparation et de refoulement (125, 125A, 125B) par l'intermédiaire du moyen de rappel (126) pouvant être sollicité par une force de rappel (F_{R}), en particulier en outre pour la production de l'impulsion de milieu.

4. Dispositif de nettoyage (100) selon l'une des revendications 1 à 3,
**caractérisé en ce que**
- un vidage par impulsions de la seconde chambre de milieu (140) vers le premier raccord de buse (123) peut être provoqué au moyen de la première chambre de milieu (130), et/ou
- un vidage par impulsions de la première chambre de milieu (130) vers le second raccord de buse (113) peut être provoqué au moyen de la force de rappel (F_{R}), en particulier à l'encontre d'une pression environnante au niveau du second raccord de buse (113), en particulier la surface (O) pouvant être sollicitée par
- une impulsion de milieu (MP) du milieu liquide (M2), à savoir dans le premier état de commutation avec une première impulsion de milieu (MP1), de préférence sous la forme d'une impulsion d'eau ou d'une impulsion de liquide similaire, et/ou
- une impulsion de milieu (MP) du milieu gazeux (M1), à savoir dans le second état de commutation avec une seconde impulsion de milieu (MP2), de préférence sous la forme d'une impulsion d'air comprimé.

5. Dispositif de nettoyage (100) selon l'une des revendications 1 à 4,
**caractérisé en ce que,** lors du vidage par impulsions de la première chambre de milieu (130), en particulier en même temps, la seconde chambre de milieu (140) du cylindre de pression (120) peut être remplie, en particulier peut être remplie à nouveau, par le milieu liquide (M2) et le milieu gazeux (M1) par l'intermédiaire du raccord de milieu (122).

6. Dispositif de nettoyage (100) selon l'une des revendications 1 à 5,
**caractérisé en ce que**
- par l'intermédiaire du volume (V) du cylindre de pression (120), un flux volumique (VS), pouvant être généré au moyen du cylindre de pression (120), du milieu gazeux et/ou du milieu liquide (M1/M2) peut être défini,
- le moyen de séparation et de refoulement (125) étant réalisé pour provoquer un vidage par impulsions de la seconde chambre de milieu (140) vers le premier raccord de buse (123).

7. Dispositif de nettoyage (100) selon l'une des revendications 1 à 6,
**caractérisé en ce que**
- une intensité d'impulsion du vidage par impulsions de la seconde chambre de milieu (140) par l'intermédiaire du premier raccord de buse (123) peut être commandée par l'intermédiaire d'une pression du milieu gazeux (M1) régnant dans la première chambre de milieu (130).

8. Dispositif de nettoyage (100) selon l'une des revendications 1 à 7,
**caractérisé en ce que** le moyen de séparation et de refoulement (125) est réalisé sous la forme d'un piston (125A), d'une membrane (125B) ou d'un soufflet plissé (125C).

9. Dispositif de nettoyage (100) selon l'une des revendications 1 à 8,
**caractérisé en ce que**
- la soupape de commutation (110) est réalisée sous la forme d'une soupape électromagnétique (110.1) et la soupape électromagnétique (110.1) présente une première section transversale de soupape (VQ1), ou
- la soupape de commutation (110) est réalisée sous la forme d'une soupape antiretour double (110.2), la soupape antiretour double (110.2) présentant une seconde section transversale de soupape (VQ2),
de préférence la première et/ou la seconde section transversale de soupape (VQ1, VQ2) étant prédéterminées de telle sorte qu'au moyen de celles-ci, une intensité d'impulsion permettant de provoquer un vidage par impulsions de la première et/ou seconde chambre de milieu (140) peut être définie.

10. Dispositif de nettoyage (100) selon l'une des revendications 1 à 9,
**caractérisé en ce que**
- le milieu liquide (M2) peut être mélangé avec un additif, en particulier un liquide de nettoyage et/ou antigel, et/ou
- le milieu liquide (M2) et/ou des composants du dispositif de nettoyage peuvent être chauffés.

11. Dispositif de nettoyage (100) selon l'une des des revendications 1 à 10,
**caractérisé en ce que** le dispositif de nettoyage (100) présente en outre :
- une seconde soupape de commutation (170), comportant un second raccord de cylindre de pression (171), un deuxième raccord de source de milieu (172) et un troisième raccord de source de milieu (173), pour commuter dans un premier état de commutation (S3) et un second état de commutation (S4),
- la seconde chambre de milieu (140) pouvant être reliée, par l'intermédiaire du raccord de milieu (122), au deuxième raccord de source de milieu (172) dans le premier état de commutation (S3) de la seconde soupape de commutation (170) et au troisième raccord de source de milieu (173) dans le second état de commutation (S4) de la seconde soupape de commutation (170).

12. Système à air comprimé (200) présentant au moins un dispositif de nettoyage (100) selon l'une des revendications 1 à 11 et au moins un capteur (210) d'un système de capteurs (810), le capteur, en particulier un élément de recouvrement transparent (211) du capteur (210), présentant une surface (O), et
- une première source de milieu (MQ1) du système à air comprimé (200) pouvant être reliée au premier raccord de source de milieu (112) de l'au moins un dispositif de nettoyage (100) par l'intermédiaire d'une première conduite d'alimentation en milieu (220), et
- une deuxième source de milieu (MQ2) pouvant être reliée au raccord de milieu (122) de l'au moins un dispositif de nettoyage (100) par l'intermédiaire d'une seconde conduite d'alimentation en milieu (230), et
- au moins une buse (240) pouvant être reliée, par l'intermédiaire d'une première conduite d'alimentation de buse (250), au premier raccord de buse (123) et, par l'intermédiaire d'une seconde conduite d'alimentation de buse (260), au second raccord de buse (113) de l'au moins un dispositif de nettoyage (100).

13. Système à air comprimé (200) selon la revendication 12,
**caractérisé en ce que**
- une première soupape antiretour (150) est disposée dans la première conduite d'alimentation de buse (250) et/ou
- une seconde soupape antiretour (160) est disposée dans la seconde conduite d'alimentation en milieu (230).

14. Système à air comprimé (200) selon la revendication 12 ou 13,
**caractérisé en ce que**
- l'au moins une buse (240) est réalisée avec une ouverture de sortie pour le milieu gazeux et le milieu liquide (M1/M2) et/ou
- l'au moins une buse (240) est réalisée avec des ouvertures de sortie séparées pour le milieu gazeux (M1) et le milieu liquide (M2).

15. Système à air comprimé (200) selon l'une des revendications 12 à 14,
**caractérisé en ce que**
le système à air comprimé (200) présente deux buses (240), à savoir une première et une seconde buse (D1, D2),
- la première buse (D1) pouvant être reliée, par l'intermédiaire de la première conduite d'alimentation de buse (250), au premier raccord de buse (123) et la seconde buse (D2) pouvant être reliée, par l'intermédiaire de la seconde conduite d'alimentation de buse (260), au second raccord de buse (113) de l'au moins un dispositif de nettoyage (100), et
- le milieu gazeux (M1) pouvant être amené dans la première buse (D1) et le milieu liquide (M2) pouvant être amené dans la seconde buse (D2).

16. Système à air comprimé (200) selon l'une des revendications 12 à 15,
**caractérisé en ce que** la première source de milieu (MQ1) est une source d'air comprimé, en particulier un compresseur (K), et la deuxième source de milieu (MQ2) est un réservoir de fluide, en particulier un réservoir d'eau (WT), en particulier
- la première source de milieu (MQ1) sert à un autre but primaire, en particulier à l'alimentation d'une installation de suspension pneumatique ou d'une installation pneumatique similaire (530) et/ou
- la deuxième source de milieu (MQ2) sert à un autre but primaire, en particulier à l'alimentation d'une installation de nettoyage de vitres (520) ou d'une installation de nettoyage similaire.

17. Système à air comprimé (200) selon l'une des revendications 12 à 16,
**caractérisé en ce que**
- en plus de la deuxième source de milieu (MQ2), une troisième source de milieu (MQ3) peut être reliée au raccord de milieu (122) de l'au moins un dispositif de nettoyage (100) par l'intermédiaire de la seconde conduite d'alimentation en milieu (230),
- la troisième source de milieu (MQ3) étant l'air ambiant (UL).

18. Procédé de nettoyage (600), à l'aide d'au moins un dispositif de nettoyage (100) selon l'une des revendications 1 à 11 et/ou d'un système à air comprimé (200) selon l'une des revendications 12 à 17 pour la sollicitation d'une surface (O) par une impulsion de milieu (MP),
- la soupape de commutation (110), laquelle présente un premier raccord de cylindre de pression (111), un premier raccord de source de milieu (112) et un second raccord de buse (113), étant commutée dans un premier état de commutation (S1) et un second état de commutation (S2),
- dans le premier état de commutation (S1), la première chambre de milieu (130) étant reliée au premier raccord de source de milieu (112) par l'intermédiaire du raccord de pression (121), pour diminuer le volume (VMK2) de la seconde chambre de milieu (140), et
- dans le second état de commutation (S2), la première chambre de milieu (130) étant reliée au second raccord de buse (113) par l'intermédiaire du raccord de pression (121), pour augmenter le volume (VMK2) de la seconde chambre de milieu (140),
- de telle sorte que la surface (O) est sollicitée par
- une impulsion de milieu (MP) d'un milieu liquide (M2), et/ou
- une impulsion de milieu (MP) d'un milieu gazeux (M1).

19. Procédé de nettoyage (600) selon la revendication 18,
**caractérisé en ce que**
- dans le premier état de commutation (S1) de la soupape de commutation (110), un chargement (610) par impulsions de la première chambre de milieu (130) du cylindre de pression (120) avec le milieu gazeux (M1), en particulier de l'air comprimé, a lieu
- un refoulement (620) par impulsions du milieu gazeux (M1), en particulier d'air comprimé, ou du milieu liquide (M2), en particulier d'eau, hors de la seconde chambre de milieu (140) du cylindre de pression (120) ; et
- une sollicitation (630) par impulsions de la surface (O) par le milieu gazeux (M1), en particulier de l'air comprimé, ou par le milieu liquide (M2), en particulier de l'eau, hors de la seconde chambre de milieu (140) du cylindre de pression (120) a lieu,
et/ou
- dans le second état de commutation (S2) de la soupape de commutation (110), une évacuation (640) par impulsions du milieu gazeux (M1), en particulier d'air comprimé, hors de la première chambre de milieu (130) du cylindre de pression (120) a lieu ; et
- une sollicitation (650) par impulsions de la surface (O) par le milieu gazeux (M1), en particulier de l'air comprimé, hors de la première chambre de milieu (130) du cylindre de pression (120).

20. Procédé de nettoyage (600) selon la revendication 18 ou 19, **caractérisé par**
- le retour (660) de la première et/ou seconde surface de transmission de pression (124.1, 124.2) du moyen de séparation et de refoulement (125), en particulier du piston (125A) ou similaire, à la position initiale (A₀), de préférence au moyen de la force de rappel (F_{R}) ; et
- le remplissage automatique (670) de la seconde chambre de milieu (140) du cylindre de pression (120) avec le milieu gazeux (M1), en particulier de l'air comprimé, ou le milieu liquide (M2), en particulier de l'eau, par production d'une dépression dans la seconde chambre de milieu (140) du cylindre de pression (120) au moyen du retour de la première et/ou seconde surface de transmission de pression (124.1, 124.2) du moyen de séparation et de refoulement (125) à la position initiale (A₀).

21. Procédé de nettoyage selon l'une des revendications 18 à 20, **caractérisé en ce que** la sollicitation d'une surface (O) par une impulsion de milieu (MP) a lieu et l'impulsion de milieu (MP) fait partie d'une séquence d'impulsions de milieu (MPₙ), en particulier une composition et/ou un ordre de la séquence d'impulsions de milieu (MPₙ) pouvant être commandés, de préférence pouvant être commandés de manière temporelle, sélective et/ou intermittente.

22. Procédé de nettoyage (600) selon les revendications 18 à 21, **caractérisé en ce que** le cylindre de pression (120) est réalisé pour retenir le milieu gazeux (M1) dans la première chambre de milieu (130) et le milieu liquide (M2) et le milieu gazeux (M1) dans la seconde chambre de milieu (140).

23. Véhicule (800) comportant au moins un dispositif de nettoyage (100) selon l'une des revendications 1 à 11 et/ou un système à air comprimé (200) selon l'une des revendications 12 à 17 et/ou un système de commande (700) comportant un appareil de commande et/ou de régulation (710), l'appareil de commande et/ou de régulation (710) étant réalisé pour mettre en oeuvre les étapes du procédé de nettoyage (600) selon l'une des revendications 18 à 22.

24. Véhicule (800) selon la revendication 23, **caractérisé en ce qu'**une installation pneumatique (830) est raccordée au système à air comprimé (200) pour l'alimentation de la première source de milieu (MQ1) en milieu gazeux (M1) et, une installation de nettoyage de vitres (820) est raccordée au système à air comprimé (200) pour l'alimentation de la deuxième source de milieu (MQ2) en milieu liquide (M2).
